(19) **Europäisches Patentamt / European Patent Office / Office européen des brevets**

(11) **EP 4 070 038 B1**

(12) **EUROPEAN PATENT SPECIFICATION**

(45) Date of publication and mention of the grant of the patent:
**30.10.2024 Bulletin 2024/44**

(21) Application number: **20835875.4**

(22) Date of filing: **07.12.2020**

(51) International Patent Classification (IPC):
**G01B 9/02** (2022.01)    **B23K 26/03** (2006.01)
**G01B 9/02015** (2022.01)    **G01B 9/02055** (2022.01)
**G01B 9/0209** (2022.01)    **B23K 26/04** (2014.01)

(52) Cooperative Patent Classification (CPC):
**G01B 9/02032; B23K 26/032; B23K 26/048; G01B 9/02072; G01B 9/0209; Y02P 10/25**

(86) International application number:
**PCT/IB2020/061581**

(87) International publication number:
**WO 2021/111423 (10.06.2021 Gazette 2021/23)**

(54) **METHOD AND SYSTEM FOR DETERMINING AND CONTROLLING THE SEPARATION DISTANCE BETWEEN A WORKING HEAD OF A LASER PROCESSING MACHINE AND THE SURFACE OF AN OBJECT BEING PROCESSED BY MEANS OF LOW COHERENCE OPTICAL INTERFEROMETRY TECHNIQUES**

VERFAHREN UND SYSTEM ZUM BESTIMMEN UND STEUERN DES ABSTANDES ZWISCHEN EINEM BEARBEITUNGSKOPF EINER LASERBEARBEITUNGSMASCHINE UND DER OBERFLÄCHE EINES BEARBEITETEN GEGENSTANDES MITTELS OPTISCHER INTERFEROMETRIE MIT GERINGER KOHÄRENZ

PROCÉDÉ ET SYSTÈME POUR DÉTERMINER ET COMMANDER LA DISTANCE DE SÉPARATION ENTRE UNE TÊTE DE TRAVAIL D'UNE MACHINE DE TRAITEMENT AU LASER ET LA SURFACE D'UN OBJET EN COURS DE TRAITEMENT AU MOYEN DE TECHNIQUES D'INTERFÉROMÉTRIE OPTIQUE À FAIBLE COHÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2019 IT 201900023181**

(43) Date of publication of application:
**12.10.2022 Bulletin 2022/41**

(73) Proprietor: **Adige S.p.A.**
**38056 Levico Terme (TN) (IT)**

(72) Inventors:
• **DONADELLO, Simone**
 **46040 Rodigo**
 **Frazione Rivalta Sul Mincio (Mantova) (IT)**
• **PREVITALI, Barbara**
 **20155 Milano (IT)**
• **COLOMBO, Daniele**
 **20838 Renate (Monza e Brianza) (IT)**

(74) Representative: **Deambrogi, Edgardo et al**
**Jacobacci & Partners S.p.A.**
**Corso Emilia 8**
**10152 Torino (IT)**

(56) References cited:
**WO-A1-2010/092533    US-A1- 2016 059 350**
**US-A1- 2019 299 327**

• **GROOT DE P ET AL: "THREE-DIMENSIONAL IMAGING BY SUB-NYQUIST SAMPLING OF WHITE-LIGHT INTERFEROGRAMS", OPTICS LETTERS, OPTICAL SOCIETY OF AMERICA, US, vol. 18, no. 17, 1 September 1993 (1993-09-01), pages 1462 - 1464, XP000388166, ISSN: 0146-9592**
• **PINHAS GIRSHOVITZ ET AL: "Doubling the field of view in off-axis low-coherence interferometric imaging", LIGHT: SCIENCE & APPLICATIONS, vol. 3, no. 3, 14 March 2014 (2014-03-14), pages e151, XP055164585, DOI: 10.1038/lsa.2014.32**

**Description**

This invention relates to laser processing a material, preferably a metal material, and specifically to improving the control of laser processing a material, for example for laser cutting, drilling or welding said material, or the additive manufacture of predetermined structures of said material.

More specifically, the invention relates to a method and to a system for determining the separation distance between a working head in a machine for lase processing a material and the surface of the material, as specified in the preamble of claim 1 and of claim 14.

According to another aspect, this invention relates to a machine for laser processing a material according to the preamble of claim 15 , comprising a system for determining the separation distance between said working head and the surface of the material, which system is provided for carrying out the above-mentioned method.

In the description and the following claims, the term "material", and "metal material" in the preferred embodiment, is used to identify any product, such as a plate or an elongate profile having either a closed cross section - for example a hollow circular, rectangular or square shape - or an open cross section - for example a flat cross section or an L-, C- or U-shaped section, etc. In additive manufacturing, the term "material" identifies the raw material, generally a powder, that is subjected to localized sintering or melting by means of the laser beam.

In industrial processes for processing materials, plates and metal profiles in particular, the laser is used as a thermal tool for a wide variety of applications that are dependent on the parameters relating to the interaction between the laser beam and the material being processed, in particular on the energy density per volume of incidence of the laser beam on the material, and on the interaction time.

For example, by directing a low density of energy (of the order of tens of W per $mm^2$ of surface) for a prolonged amount of time (in the range of seconds) on a metal piece, a hardening process occurs, while, by directing a high density of energy (of the order of tens of MW per $mm^2$ of surface) for a time of femtoseconds or picoseconds on the same metal piece, a photoablation process occurs. In the intermediate range of increasing energy density and decreasing processing time, controlling these parameters makes it possible to implement welding, cutting, drilling, engraving, marking processes.

In several processes, including drilling and cutting processes, it is necessary to generate a flow of an assist gas in the processing region in which the laser beam interacts with the material, which has mechanical functions of driving the melt, or chemical functions of assisting with combustion, or even technological functions of shielding from the environment surrounding the processing region.

In additive processes, the material may, for example, be in the form of a filament, or in the form of a powder emitted from a nozzle on account of the flow of an assist gas, or even may alternatively be present in the form of a powder bed. The material is therefore melted by laser radiation, thus obtaining a three-dimensional mold following the resolidification of said material.

In the field of laser processing materials, laser cutting, drilling and welding are processes that may be carried out by the same machine, which is able to generate a focused high-power laser beam having a preset transverse power distribution in at least one working plane of the material, typically a laser beam having a power density of between 1 and 10000 $kW/mm^2$, and to control the direction and the position of incidence of the beam along the material. The difference between the various types of processing that may be performed on a material is substantially attributable to the power of the laser beam used and to the interaction time between the laser beam and the material subjected to processing.

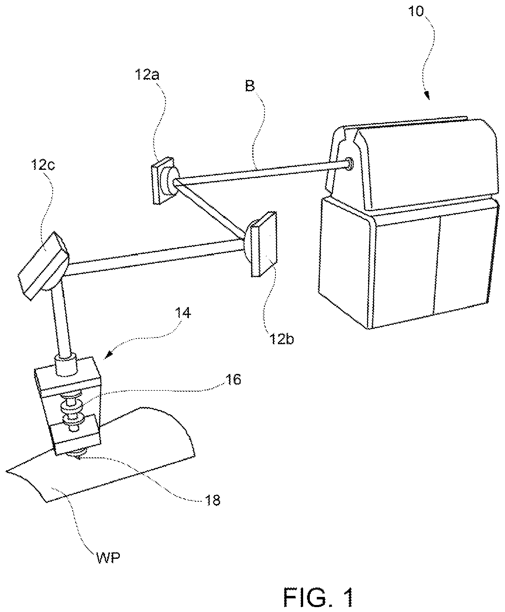

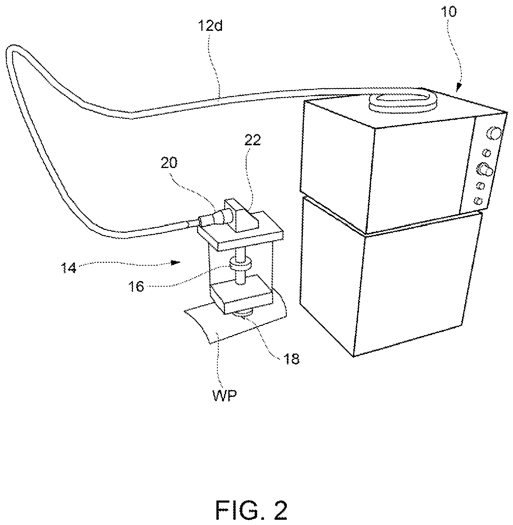

Laser processing machines according to the prior art are shown in Fig. 1 and 2.

Fig. 1 schematically shows a machine for industrial processes using a $CO_2$ laser having an optical path of the laser beam in air, which machine comprises an emission source 10, such as a $CO_2$ laser generator that is adapted to emit a monomodal or multimodal laser beam B, and a plurality of reflective mirrors 12a, 12b and 12c that are adapted to lead the laser beam emitted by the emission source along an optical path for transporting the beam towards a working head indicated, as a whole, by 14, which is arranged near to a material WP. The working head 14 comprises an optical system 16 for focusing the laser beam, generally consisting of a focusing lens, which is adapted to focus the laser beam along an optical axis of propagation that impinges on the metal material. A nozzle 18 is arranged downstream of the focusing lens, through which nozzle the laser beam directed towards a region of a working plane of the material passes. The nozzle is adapted to direct a beam of an assist gas injected by a corresponding plant (not shown) towards the processing region on the material. The assist gas is used to control the execution of a processing process (drilling or cutting) as well as the quality of the process that is obtainable. For example, the assist gas may comprise oxygen that facilitates an exothermic reaction with a metal, such as the oxidation of iron, which generates various types of iron oxides by means of an exoenergetic reaction, thereby releasing energy into the material that contributes, together with the energy released from the laser beam, to maintaining a dynamic equilibrium of the process, thereby making it possible to increase the cutting speeds, or an inert gas such as nitrogen that does not contribute to the melting of the material, but carries out a propulsive function of the molten material itself, protects the (metal) material from unwanted oxidization at the edges of the processing profile, protects the working head from possible splashes of the melt and may also be used to cool the sides of the groove produced in the material, thereby enclosing the extension of the heat-affected zone.

Fig. 2 schematically shows an industrial processing machine comprising a laser beam launched in an optical fiber. This machine comprises an emission source 10, such as a laser generator that may launch a laser beam in a transport fiber, for example an ytterbium-doped fiber laser or a direct diode laser, which is adapted to emit a monomodal or multimodal laser beam, and an optical fiber guide 12d that is adapted to lead the laser beam emitted by the emission source towards the working head 14 arranged near to the material WP. At the working head, the laser beam emerging from the fiber with its divergence controlled is collimated by a dioptric collimation system 20 and reflected by a catoptric system 22 before being focused by means of an optical focusing system 16, generally consisting of a focusing lens, along an optical propagation axis that impinges on the material WP that passes through the emission nozzle 18.

As a first approximation, an ideal laser beam, that is a laser beam ideally collimated in parallel rays, downstream of the optical focusing system concentrates in a focusing spot having finite dimensions at the waist thereof. In general, in industrial processing uses, the optimum process condition is reached when a transverse position of the plane corresponds to the waist of the beam defined with precision, even to one tenth of a millimeter, with respect to the wall of the material on which the beam impinges and to the wall of the material from which the beam exits.

The distribution of the power density of a laser beam collimated normally is typically of a Gaussian shape with rotational symmetry in the case of a monomodal beam, that is with power concentrated around the longitudinal axis of the beam (Z axis) and gradually decreasing along a peripheral cover, or may be described as the envelope of Gaussian profiles having rotational symmetry in the event of a multimodal beam.

The use of beams of monomodal or multimodal laser radiation , which can be described in a first approximation as being Gaussian, in the field of high-power applications of the lasers responds to technological control needs. In fact, a Gaussian beam is easily described by small parameters, and may be easily controlled in terms of its propagation along an optical transport path by an emission source at the head of a processing machine, since it benefits from the characteristic of propagating without modifying the power distribution, and therefore it may be described by means of a ray value and a divergence value in conditions of propagation in the far field (in which case it is possible to use a geometrical optics approximation). In conditions of propagation in the near field of the focused beam, along a working trajectory where the geometrical optics approximation does not matter, the beam however maintains the Gaussian shape of the power distribution in every cross section thereof.

A laser beam comprising higher-order transverse modes has, in contrast, a non-Gaussian power distribution. These conditions are typically obtained by using dioptric systems (transmissive optical systems, that is lenses) or catoptric (reflective optical systems, that is mirrors), which modify the shape of the beam from a Gaussian distribution.

The control of the propagation direction or of the distribution shapes of the transverse power of the laser beam that differ from the Gaussian shape and possibly have different symmetry to the rotational symmetry in the processing region of the material, for example in relation to the controlled distribution of an assist gas or as a result of the separation distance between the working head and the material, of the working trajectory to be traveled and of the type of process to be carried out, is advantageous for the processing process. For example, the control of the power distribution of a laser beam, possibly by breaking the rotational symmetry of the beam, may make it possible to identify or expand the power distribution where necessary in relation to the separation distance between the working head and the material and to the working trajectory.

It is evident that the control of the propagation direction of the laser beam or of the distribution shape of the transverse power of the laser beam has to be as precise and repeatable as possible, so that the advantages indicated may be achieved. For this reason, it is necessary for the movement of the working head and the position of the proximal end thereof with respect to the material, that is the position of the laser beam output - and of the nozzle for the outflow of the assist gas during processes that require this - with respect to the material, and in particular with respect to the point where the laser beam impinges on the material, are controlled with extreme precision and in real time on the basis of the current processing condition and of the current position along the working trajectory. In contrast, there is a risk of focusing the laser power in an undesirable working plane in the thickness of the material as well as to use a pressure of the assist gas that - at the surface of the material - is excessive or insufficient.

For these reasons, in the field of laser processing, it is desirable to be able to accurately determine the separation distance between the working head, that is the proximal end of the working head with respect to the material, and the surface of said material.

When processes on metal materials, it is known to use capacitive sensors provided to detect the change in electric capacitance between the metal end of the working head, for example the aperture in the nozzle, and the surface of the material.

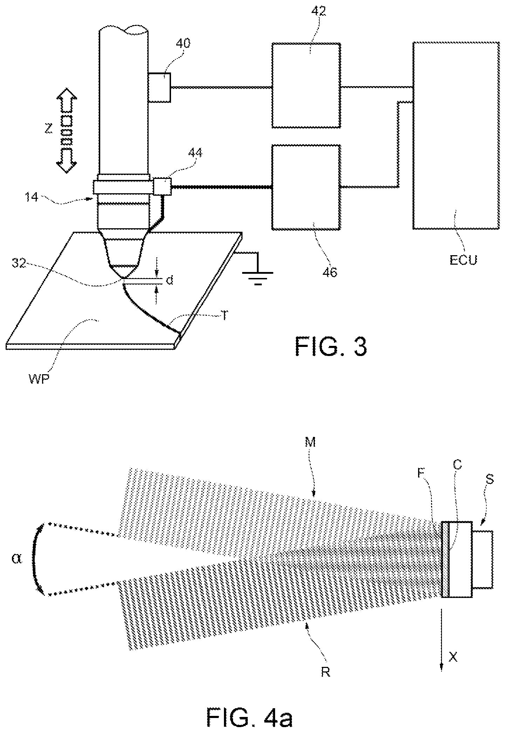

Such a solution is given in Fig. 3 as an example. The figure shows a working head 14 according to one embodiment of the prior art, which is arranged at a separation distance d from the material WP being processed, and an associated electronic unit ECU for controlling the process. The laser beam generated by the emission source, transported to the working head 14 by means of an optical path in air having multiple reflections or in an optical fiber, is collimated towards the optical focusing system along the optical propagation axis in a direction of incidence on the material being processed and emerges from a beam output 32, preferably at or downstream of protective glass (not shown) that is adapted to protect the focusing system from possible splashes of the melt.

The expression "beam output" in the following description indicates the portion of the working head from which the processing laser beam emerges into open air, i.e. propagates outside the volume of the head towards the material being processed, and may be the end portion of the optical focusing system or a protective structure thereof, or the tapered end of a nozzle for supplying a flow of assist gas for applications that require the supply of gas to the process. This portion may be considered to be the distal portion of the working head, having as a reference the entire machine, or as the end proximal to the material being processed, and these terms will be equally used in the description.

Movement actuator means 40 are coupled to the working head 14 and are controlled by the unit ECU for controlling the process by means of servomotors 42, in order to control the mechanical parameters of the process, for example to control the movement of the working head along the degrees of freedom given thereto by the specific embodiment of the machine in order to follow a programmed working trajectory T on the material being processed, in particular for the movement along the Z axis towards and away from the material on the basis of its profile or the processing profile. Means (not shown) are also provided for mechanically adjusting the optical focusing system in order to calibrate the position of the system transversally to the beam propagation direction (X-Y axis) and in the beam propagation direction (Z axis).

A capacitive sensor associated with the working head 10 is indicated by 44 and is configured to detect the variation in electrical capacitance between the end 32 of the working head that is proximal to the material, here the aperture in the nozzle that coincides with the laser beam output, and the surface of the material WP, placed at a reference potential. The electrical capacitance signal detected by the sensor 44 is processed by an associated computer module 22 programmed to determine the separation distance between the working head and the material on the basis of the value for the acquired electrical capacitance, having knowledge of the parameters of the machine and the process, and is forwarded therefrom to the unit ECU for controlling the process in order to control the movement of the working head using feedback.

This technique is disadvantageously not applicable when processing materials that are not metal.

This also lacks accuracy since the capacitive effect is not only produced locally between the laser beam output and the corresponding point of incidence on the material, but also as a result of the large surfaces of the working head and of the material near to the laser beam output and to the point of incidence. In the event of significant curves (positive or negative) in the surface of the material near to edges or in the event where the working head approaches the material in directions that are not orthogonal to the local surface, it is necessary to run calculational algorithms for compensating for the measurements, which algorithms are rather onerous in computational terms and which are, in any case, not able to completely compensate for the complexity of the configurations that may be encountered in reality.

WO 2010/092533 A1 discloses a method and apparatus for topological or shape measurement of objects by using an interferometric technique comprising an optical source with selectable coherence.

US 2016/059350 A1 discloses a method for measuring the distance between a workpiece and a machining head of a laser machining apparatus, based on an object beam directed on to the workpiece by a light source of an optical coherence tomograph and a measuring beam used to compensate falsifications of the measured distance that are caused by pressure fluctuations in the interior of the machining head.

US2019299327A1 discloses a method, apparatus and system to monitor and characterize the dynamics of a phase change region created during laser welding and other material modification processes, using low-coherence interferometry.

The article by P. de Groot and L. Deck "Three-dimensional imaging by sub-Nyquist sampling of white-light interferograms", OPTICS LETTERS, OPTICAL SOCIETY OF AMERICA, US, vol. 18, no. 17, 1993, pages 1462 - 1464 (XP000388166) demonstrates a simple way of increasing the data acquisition and processing speed in a scanning white-light interferometer for surface topography measurement, by undersampling interference data and processing the resultant sub-Nyquist interferograms in the frequency domain to create complete three-dimensional images.

The article by P. Girshovitz et al., "Doubling the field of view in off-axis low-coherence interferometric imaging", LIGHT: SCIENCE & APPLICATIONS, vol. 3, no. 3, 2014, page e151 (XP055164585) presents a new interferometric and holographic approach, named interferometry with doubled imaging area (IDIA), with which it is possible to double the camera field of view while performing off-axis interferometric imaging, without changing the imaging parameters, such as the magnification and the resolution.

This invention is aimed at providing a method for determining the separation distance between the working head of a machine for laser processing a material and the surface of said material, which method is accurate and robust, that is not affected by effects linked to the shape of the material on which the machine operates or to the processing conditions, for example the relative speed and the direction of translation of the working head with respect to the material.

An additional object of this invention is to provide a method for determining the separation distance between the working head of a machine for laser processing a material and the surface of said material in a large range of measurable distances without jeopardizing the measurement accuracy.

According to this invention, these objects are achieved on account of a method for determining the separation distance between a working head of a machine for laser processing a material and the surface of said material, which method has the features mentioned in claim 1.

Specific embodiments form the subject matter of the dependent claims, the contents of which are to be understood to be an integral part of the present description.

This invention also relates to a system for determining the separation distance between a working head of a machine for laser processing a material and the surface of said material, which system has the features mentioned in claim 14.

The invention also relates to a machine for laser processing a material, which comprises a system for determining the separation distance between said working head and the surface of the material, which system is configured to carry out the above-mentioned method.

In summary, this invention is based on the application of the principles of optical interferometry.

The term "optical interferometry" indicates a plurality of techniques that make use of the phenomenon of the interference between a measurement optical beam and a reference optical beam, which beams are superimposed and generate interference fringes. The theory of optical interferometry in coherent light is well known and is used for the relative comparison between distances, without, however, being able to give univocal absolute measurement information for said distances, for example in the event of a temporary interruption of the optical signal.

This invention is inspired by the consideration that an absolute distance measurement may be carried out in the optical domain by using a low coherence interferometry technique. Low coherence interferometry is a simple technique for measuring distances between a probe and a target with high precision, and is based on the comparison between the distance travelled by a measurement optical beam that propagates from a source to a detector assembly and, in this path, is emitted by the probe and back-reflected by the target, and the distance travelled by a reference optical beam that propagates from the source to the detector assembly across a reference path tuned to the measurement path in a known nominal distance condition between the probe and the target.

In low coherence interferometry, the measurement and reference optical beams are generated by low coherence sources, for example LEDs or super luminescent diodes, and the interference fringes between the above-mentioned beams only appear when the respective optical paths - or lengths of optical paths - correspond, the optical path being defined as the sum of the products between the geometric lengths and the respective refractive indices within each portion along the entire optical path traveled - that is when the length of the measurement path corresponds to the length of the reference path within the coherence length range. Assuming that the length of the reference path is known, it is possible to derive the length of the measurement path by detecting the presence of the envelope of the interference fringes with a resolution of the order of the coherence length that is typically in the micrometers range (from 5 um to 100 um).

This technique is particularly robust with regard to the optical noise since the light coming from other sources or from said laser processing process incoherently adds up to the interferometric signal without altering the pattern of interference fringes. The measurement is applied locally at the point at which the measurement optical beam is directed and is independent from the morphology of the surroundings. This also allows for precise absolute measurements of the distance in a distribution that is substantially coaxial with the laser process.

Advantageously, the low coherence interferometry technique with the detection of the pattern of interference fringes in the space domain is the most promising and more efficient in terms of operative flexibility for the objects of this invention, compared with the detection in the time domain or the frequency domain.

In fact, in low coherence interferometry with the detection in the time domain, the pattern of interference fringes is detected by a photodiode or by an array of photodiodes, or by a similar acquisition screen, by adapting the length of the reference path in order to reach a condition where the lengths of the reference path and of the measurement path correspond except for a tolerance of the order of the coherence length. In this case, the limitation on the range of available measurements is associated with the adaptation of the length of the reference path, which - for example - is carried out by means of the translation of a back-reflecting element that is arranged along the above-mentioned path, it being possible for the translational spatial range of the back-reflecting element of the reference path to be between a few microns up to several millimeters, the size of the translational range being to the detriment of the actuation speed or of the operational complexity.

Although the technique of detection in the time domain is rather simple to carry out and makes it possible to easily achieve the correspondence between the absolute optical lengths of the measurement path and of the reference path, this is, however, unsuitable for implementation for applications in which the course of an industrial process is measured in real time. In fact, for a dynamic measurement, the length of the reference path has to be continuously modulated to find the condition in which it corresponds with the length of the current measurement path, which condition causes the appearance of the pattern of interference fringes. This may be obtained by means of various types of control devices, including refractive index modulators or fast-acting mechanical actuators, for example piezoelectric actuators; however, these types of devices are rather expensive and very delicate since they have to operate at a much faster actuation speed than the sampling rate for measuring the distance, which is typically above kHz, a condition that often may not be obtained easily, especially in the range of large displacements.

A different detection technique is based on the Fourier transform relationship between the spectral density function and the cross-correlation of the measurement and reference beams, by means of which it is possible to extract the differential distance measurement in real space from the spectral profile of the wavelengths of the two interfering beams. In this way, mechanical actuators are not required to align the length of the reference path with the length of the measurement path. A single spectral acquisition of the superimposed measurement and reference beams is possible using a diffraction grating and a focusing lens downstream thereof for projecting the spectral distribution of the interfering beams on a linear sensor device, for example a video camera. The spectrum of the two interfering beams shows a periodic modulation, and the periodicity (frequency) of this modulation in the wavelength space varies with the difference between the optical lengths of the measurement path and of the reference path. An algorithm for calculating the Fourier transform, for example an FFT algorithm, is applied in order to extract the measurement of the signal intensity peak in relation to the difference between the optical paths in real space.

This technique also requires high-quality optical elements that have to be aligned with extreme precision and fast sensors for acquiring the signals. Furthermore, back-reflecting signals may determine artifacts in the measurement and the sensitivity of the acquisition may be reduced by the presence of self-correlation signals, in particular in the case of highly reflective surfaces. In order to calculate the absolute distances, it is necessary to rapidly process the signals on the basis of the execution of FFT algorithms, which require specific computational instruments.

Unlike the low coherence interferometry techniques in the time domain, in which a scan of the lengths of the reference path is temporally distributed, and in the frequency domain, in which the comparison information between the length of the measurement path and the reference path is encoded in the wavelength space, the low coherence interferometry technique with the detection in the space domain combines the two previous techniques and makes it possible to directly visualize the outcome of the measurement in real space, rendering a rapid acquisition thereof possible by means of an economical device such as an image sensor, for example a linear sensor.

In the typical design of a low coherence interferometric system with the detection in the space domain, the measurement and reference beams impinge, superimposed, on the sensor means surface from different directions, and the surface of the sensor means is directly adapted to detect the pattern of interference fringes that arises from this superimposition. In this configuration, a spatial variation in the measurement optical path with respect to the reference optical path is directly displayed on the sensor means as a result of the mutual angle of inclination of the two beams. Therefore, the measurement of the difference between the length of the measurement optical path and the length of the reference optical path may be simply extracted by detecting the position of the pattern of the interference fringes on the sensor means, the extension of the pattern of the interference fringes in the linear dimension of the sensor means being of the order of the coherence length of the optical radiation of the beams.

In the low coherence interferometry technique with the detection in the space domain, the length of the optical path of each beam that obliquely impinges on the common region of incidence of the sensor means varies linearly with the position along the illumination axis of the sensor means, therefore the difference between the measurement and reference optical paths also varies linearly. The pattern of interference fringes appears in a specific linear range of the image acquired by the sensor means, which corresponds to the condition in which the optical lengths of the measurement path and the reference path are equal within the coherence length of the optical radiation, while, in the other regions of the sensor means, the beams are incoherently superimposed. By detecting the position of the envelope of the pattern of interference fringes along the linear extension of the sensor means, it is possible to extract the particular length of the measurement path.

This measure is only limited by the conditions in which the envelope of the pattern of interference fringes forms within the illumination region of the sensor means, that is within the sensitive region of the photodetector devices that form the sensor means. The measurement range is determined by the inclination of the beams on the region of incidence, or better still by the angle of incidence therebetween, and - with the same inclination of the beams - from the minimum of the number of photodetectors or photodetection regions (also referred to as pixels of the sensor means), which are illuminated by the superimposed beams and the overall number of photodetectors of the sensor arrangement, or from the minimum number of regions (pixels) that have to be illuminated in order to demodulate the pattern of the interference fringes with respect to the overall number of regions (pixels) available on the sensor means. Under common conditions comprising a sensor arrangement having several thousand photodetectors, a measurement range of several tenths of millimeters may be obtained before the appearance of an aliasing effect of the interference fringes. However, the inventors have demonstrated that the presence of the aliasing effect of the pattern of interference fringes does not limit the measurement but in fact may be used to increase the range of measurable distances, as will be described in more detail below. In fact, this system of sub-sampling is reflected in an effective demodulation of the fringe pattern at lower spatial frequencies, the demodulation being obtained in an analogous way directly at the level of the photodetectors of the interferometric sensor arrangement without the need to interpose additional elements.

Advantageously, the adoption of an interferometry technique with the detection in the spatial domain makes it possible to take accurate distance measurements using a static system of measurement and reference optical paths and for each individual acquisition or sampling of the spatial distribution of the optical radiation of the superimposed measurement and reference beams, which impinge on the sensor means. In order to provide a system of this kind, standard optical elements are exclusively necessary, and the signals emitted by the sensor means are processed on the basis of simple calculation algorithms, which is therefore not computationally onerous. With this technique, the drawbacks of the detection technique in the frequency domain, that is the presence of autocorrelation signal components, the artifacts at negative frequencies and the reduction in sensitivity at high values for the measurable distances are also overcome.

According to the invention, the application of the considerations set out above to a machine for laser processing a material, in particular for laser cutting, drilling or welding or additive manufacturing, is achieved by means of the arrangement of an interferometric system comprising a measurement optical path that is integrated, at least in part, in the working head, and a reference optical path associated with the measurement optical path, which may also be integrated in the working head or outside thereof, wherein the measurement optical path emerges from the measurement head in the region of the output for the beam or more generally at the end of the head that is proximal to the surface of the material being processed.

Additional features and advantages of the invention will be presented in more detail in the following detailed description of one embodiment thereof, given by way of non-limiting example, with reference to the attached drawings, in which:

Fig. 1 and 2 are examples of laser processing machines according to the prior art;

Fig. 3 shows schematic example of a working head of a laser machine near to a material being processed and related control means, according to the prior art;

Fig. 4 is a schematic view of the configuration of a linear low coherence interferometric system with spatial detection;

Fig. 4b is a schematic view of the variation in the lengths of the measurement and reference optical paths with respect to the relative point of incidence, on an illumination axis of a sensor arrangement, of the pattern of interference fringes;

Fig. 4c is a schematic view (top graph) of the variation in the difference between the lengths of the measurement and reference optical paths with respect to the relative point of incidence, on an illumination axis of a sensor arrangement, of the pattern of interference fringes, and the identification of a pattern of interference fringes on the illumination axis of the sensor arrangement in a condition in which the optical lengths of the measurement and reference paths are equal (bottom graph);

Fig. 5 is a simplified diagram of a system for determining the separation distance between a working head of a machine for laser processing a material and the surface of the material, which is the subject matter of the invention;

Fig. 6 schematically shows the path of the processing laser beam and of the low coherence measurement optical beam in a working head according to a simplified embodiment of the working head;

Fig. 7 is a detail of the relative position of the processing laser beam and of the measurement low coherence optical beam at the output of the working head, in a cutting or drilling region of the material;

Fig. 8 is a graph showing the trend of the contrast or visibility value for the simulated pattern of interference fringes as a function of the ratio between the spatial frequency of said pattern of interference fringes and the spatial frequency of the photodetectors in a linear arrangement of photodetectors along the illumination axis of the sensor arrangement of the pattern of interference fringes;

Fig. 9a is a graph showing a dependency relationship between the result of the interferometry reading, expressed in terms of difference in optical length between the measurement optical path and the reference optical path, and the pressure of an assist gas, used, for example, in a laser cutting process, which forms along a portion of the measurement optical path, for a predetermined separation distance between the working head and the surface of the material;

Fig. 9b is a graph showing a dependency relationship between the result of the interferometry reading, expressed in terms of the change in the local position of a surface of an optical element for protecting or delimiting the chamber of the assist gas along the measurement beam, and the trend (increasing, decreasing) of the pressure of the assist gas;

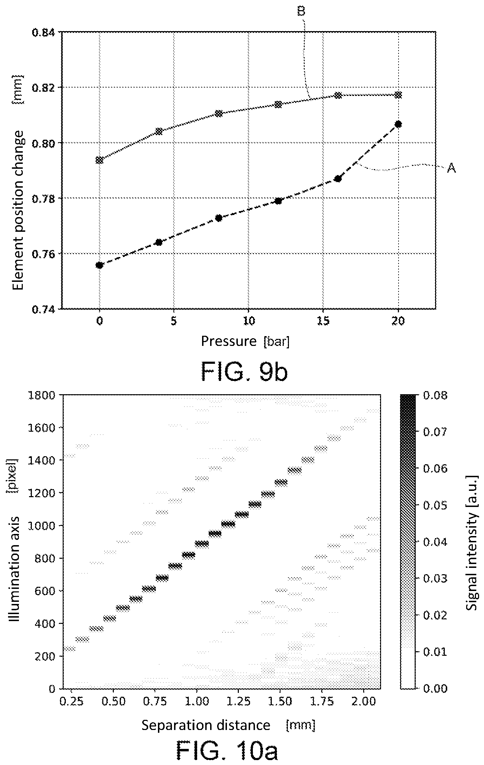

Fig. 10a is a diagram showing a main signal indicative of the identification of the pattern of interference fringes along the illumination axis of the sensor arrangement as a function of the separation distance between the working head and the material, and corresponding additional multiplexed signals indicative of the identification of respective additional patterns of interference fringes along the illumination axis of the sensor arrangement, which result from an additional measurement or reference optical path being traveled along, having a geometric length that differs from the geometric length of the main measurement or reference optical path, which includes at least one partial back-reflection at the surface of an optical element interposed along the optical path of the processing laser beam;

Fig. 10b is an exemplary calibration curve that represents the trend of the peak of the signal indicative of a main pattern of interference fringes as a function of the separation distance between the working head and the material; and

Fig. 10c shows a series of graphs representing a measurement conducted during a cutting process.

Fig. 1 to 3 have been described previously with reference to the prior art and the contents thereof are referred to here as long as they are common to the controlled production of a processing machine in order to carry out a method according to the teaching of this invention.

Fig. 4a is a schematic view of the configuration of a low coherence interferometric system with linear spatial detection. A measurement collimated beam of optical radiation, indicated by M, and a reference collimated beam of the same optical radiation, indicated by R, impinge so as to be superimposed on a common region of incidence C of a sensor arrangement S, at a predetermined angle of incidence $\alpha$, where they form a pattern of interference fringes F, the extension of which on the common region of incidence is of the order of the coherence length of the optical radiation. The width of the measurement collimated beam of optical radiation and the width of the reference collimated beam of optical radiation are preferably of such a size so as to substantially illuminate the entire sensor arrangement. In order to increase the intensity and the contrast of the signal detected, the beams may be concentrated on the sensor in the direction that is perpendicular to the illumination axis, for example by means of a cylindrical focusing lens.

The sensor arrangement S comprises, for example, an arrangement of photodetectors along at least one illumination axis of the region of incidence (x axis in the figure). The arrangement of photodetectors is a linear or bidimensional arrangement of photodetectors, preferably a linear arrangement. The illumination axis of the region of incidence is determined by the intersection between the plane defined by the angle of incidence of the measurement beam M and of the reference beam R and the sensor surface of said sensor arrangement.

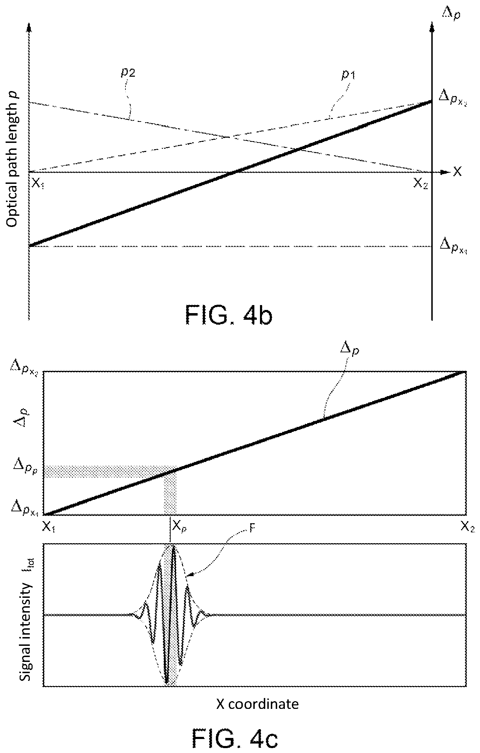

In Fig. 4b, the graph schematically shows the variation in the lengths $p$ of the measurement and reference optical paths, referring to the initial incident wavefront of the respective measurement and reference beams on the common region of incidence of the sensor arrangement S, in the typical configuration in which the two incident beams are symmetrical on the sensor arrangement. The x-axis indicates the position or x coordinate along the illumination axis of the photodetector arrangement. Reference numeral $p1$ indicates the additional length of a first optical path, for example the measurement optical path of the measurement optical radiation beam M, with respect to the initial point of incidence of the wavefront of the measurement beam M at a first end of the common region of incidence C, $x_1$, which is the origin of the measurement axis. Reference numeral $p2$ indicates the additional length of a second optical path, for example the reference optical path of the reference optical radiation beam R, with respect to the initial point of incidence of the wavefront of the reference beam R at a second end of the common region of incidence, $x_2$, which is opposite the first. Reference numeral $\Delta p$ indicates the difference between the additional lengths of the two paths, $p1 - p2$, which is zero at the middle coordinate of the sensor arrangement, and varies from a value $\Delta p_{x1}$ at the end $x_1$ of the common region of incidence to a value $\Delta p_{x2}$ at the end $x_2$ of the common region of incidence.

In Fig. 4c, the top graph shows the curve $\Delta p$ that corresponds to the graph in Fig. 4b, and the bottom graph shows the identification of a pattern of interference fringes F on the illumination axis (x) of the sensor arrangement S that occurs when the optical lengths of the measurement and reference paths are equal. The envelope of the pattern of interference fringes F is indicated with hatching, and the particular difference $\Delta p_p$ between the additional lengths of the paths of the measurement and reference optical beams is associated with the coordinate of the envelope peak, $x_p$, by means of the upper graph.

$P_M$ and $P_R$ indicate the measurement and reference paths, the overall lengths of which may be expressed as $P_M = P1 + p1$ and $P_R = P2 + p2$, where P1 is the optical length of the measurement optical path from the low coherence optical radiation source to the first wavefront incident on the sensor arrangement, and P2 is the optical length of the reference optical path from the same low coherence optical radiation source to the first wavefront incident on the sensor arrangement, and is preferably constant. It is possible to consider P1 to be composed of $P_{head} + D_{standoff}$, where $P_{head}$ is the length of the optical path upstream and inside the working head, including a first portion between the low coherence optical radiation source and the end of the working head that is proximal to the material WP being processed (for example, the laser beam output 32) and a second portion between the above-mentioned proximal end of the working head (for example, the laser beam output 32) and the sensor arrangement S, which portions have a particular predetermined and invariant geometric length, and $D_{standoff}$ is the separation distance in open air between the end of the working head that is proximal to the material WP being processed and the surface of said material. P2 is the optical length of the reference optical path, which is equivalent to the optical length of the measurement optical path in a nominal operating condition, indicated in the following as $P1_{nom}$, wherein the distance between the proximal end of the working head (for example, the laser beam output 32) and the surface of the material WP corresponds to a predetermined nominal separation distance $D_{standoff\_nom}$.

The difference in optical length between the measurement optical path and the reference optical path is represented mathematically as:

$$P_M - P_R$$

and the interference fringes appear in the condition in which this is zero, that is:

$$P_M - P_R = 0$$

a relationship that may be broken down as:

$$P1 + p1 - (P2 + p2) = 0$$

which may be written again as:

$$P_{head} + D_{standoff} + p1 - P2 - p2 = 0$$

from which the following is deduced:

$$P_{head} + D_{standoff} - P2 + \Delta p = 0$$

$$P_{head} + D_{standoff} - P1_{nom} + \Delta p = 0$$

$$P_{head} + D_{standoff} - P_{head} - D_{standoff\_nom} + \Delta p = 0$$

$$\Delta p = D_{standoff\_nom} - D_{standoff}$$

that is the difference between (a) the current separation distance between the working head and the surface of the material in the processing region, $D_{standoff}$, and (b) the nominal separation distance, $D_{standoff\_nom}$, is equal to the difference between the additional lengths of the measurement optical path and of the reference optical path.

Therefore, a current separation distance between the working head 14 and the surface of the material WP that is different from the nominal separation distance, determined by a difference in optical length between the measurement optical path and the reference optical path, is attributable to a difference between the additional lengths of the measurement optical path and of the reference optical path, therefore to a movement of the pattern of interference fringes along the illumination axis x of the sensor arrangement S with respect to a nominal position, for example the median plane of said sensor arrangement S.

It is noted that, in a laser cutting or drilling application involving a flow of assist gas, the end of the working head that is proximal to the material being processed is generally the end portion of the assist gas nozzle, while in a welding or additive manufacturing application in which gas is not supplied, the end of the working head that is proximal to the material being processed is generally the processing laser beam output.

In the application that forms the subject matter of the invention, the length of the reference optical path is set so as to correspond to the length of the measurement optical path at a preset nominal separation distance between the working head and the surface of the material in the processing region, and the difference between (a) the current separation distance between the working head and the surface of the material in the processing region and (b) the predetermined nominal separation distance results from the difference in length between the measurement optical path and the reference optical path, which may be identified on the basis of the position of the pattern of interference fringes along the illumination axis of the region of incidence of the sensor arrangement S. Advantageously, a middle position of the pattern of interference fringes along the illumination axis corresponds to said preset nominal separation distance. Alternatively, an end position of the pattern of interference fringes along the illumination axis may correspond to a null nominal separation distance between a nozzle and the material being processed, which is equivalent to the contact between the nozzle that constitutes the proximal end of the head and the material, thereby allowing the separation distance therebetween to only increase, and therefore the pattern of interference fringes exclusively moves towards the opposite end of the illumination axis.

With reference to the bottom graph in Fig. 4c, the position $x_p$ of the pattern of interference fringes along the illumination axis is the intrinsic position of the envelope of the intensity of the optical radiation of said pattern of interference fringes, and this intrinsic position of the envelope of the intensity of the optical radiation of said pattern of interference fringes is - for example - the position of the peak or maximum intensity of the envelope of the optical radiation, or the middle position of the photodetectors weighted with the optical intensity of the fringe envelope.

The detection of the fringe envelope may be carried out by means of optical intensity profile demodulation techniques, for example by applying a band-pass spatial filter, or high-pass and low-pass filters in a sequence, so as to reveal the only signal components corresponding to the spatial frequency of the interference fringes. For example, in a first step of processing the optical intensity data, the optical intensity detected by a matrix of sensors is integrated in the direction that is perpendicular to the development direction of the interference fringe, for example for columns of a matrix of sensors oriented so as to receive a pattern of vertically aligned interference fringes (this operation is not required if the sensor arrangement is a linear arrangement of photodetectors on which the beams are focused by means of a cylindrical lens). Subsequently, the signal generated by the photodetectors is normalized with respect to a background signal, for example extracted from an image devoid of interference fringes. Therefore, a high-pass spatial filter is applied, for example to 1/5 of the photodetector spatial frequency in order to remove the baseline and to maintain the pattern of interference fringes. Since, in this way, a signal is obtained that oscillates around zero, the absolute value of the signal is extracted and therefore a low-pass spatial filter is applied, for example to 1/25 of the photodetector spatial frequency in order to extract the envelope of the pattern of interference fringes. The position of the pattern of the interference fringes is lastly obtained by detecting the position of the envelope of the fringe pattern by seeking the maximum thereof or by comparing the envelope with a predetermined model function (for example a Gaussian function) and extracting the peak of the model function.

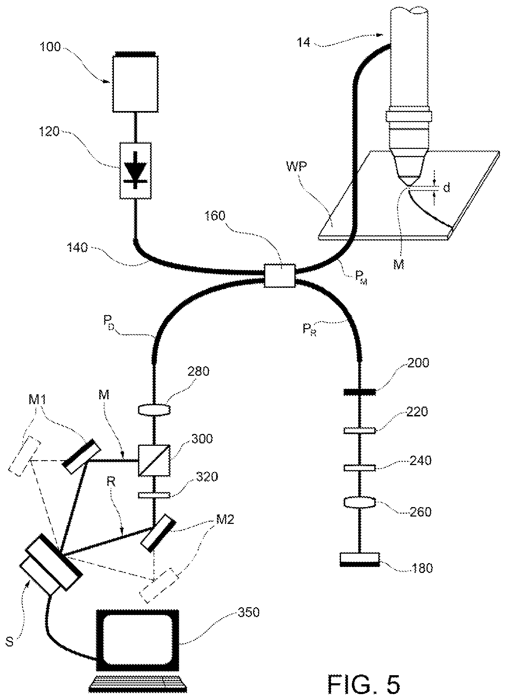

Fig. 5 shows an example diagram of a system for determining the separation distance between a working head 14 of a machine for laser processing a material WP and the surface of said material, which forms the subject matter of the invention, in accordance with an embodiment that is currently preferred.

In the figure, 100 indicates a low coherence optical radiation source suitably having linear polarization, such as an LED or a super luminescent diode, for example which operates in the visible or near-infrared wavelength range. The optical radiation emitted by the source 100, downstream of a suitable optical isolator 120, is injected into an optical waveguide, for example an optical fiber 140, and carried to a beam splitter 160 that is adapted to generating a measurement optical radiation beam M, which is routed on a measurement optical path $P_M$, and a reference optical radiation beam R that is routed on a reference optical path $P_R$.

The measurement optical path $P_M$ and the reference optical path $P_R$ are guided paths and include optical guides (for example optical fibers) that are adapted to maintain the same polarization of the beam along the entire path.

The measurement optical path $P_M$ is led to the working head 14 of a machine for laser processing a material as described above, and emerges from there towards the material WP being processed, on which it impinges. The region where the measurement beam M is output corresponds to the region of the measurement head, it being intended for the distance of said measurement head from the above-mentioned material to be measured, for example the opening in the nozzle for supplying the flow of assist gas or the laser beam output.

The reference optical path $P_R$ is instead led to a reflective return element 180, preferably by interposing an optical density filter 200, an optical dispersion compensation element 220, a λ/4 plate 240 and a focusing lens 260. The optical reflective element 180 is arranged along the reference optical path such that the optical length of this path from the beam splitter 160 to the optical reflective element 180 corresponds to the optical length of the measurement optical path from the beam splitter 160 to the (reflective) surface of the material WP being processed in an operating state in which said surface is at the preset nominal separation distance $D_{standoff\_nom}$ from the working head, that is from the end of the working head that is proximal to the material, such as the opening in the nozzle for the assist gas or the beam output.

The measurement and reference optical paths $P_M$, $P_R$ are formed such that the optical radiation travels along these paths in both directions, heading back to the beam splitter 160 after being reflected at the surface of the material WP being processed and at the reflective optical element 180, respectively. In the reference optical path $P_R$, the double passage of the reference beam R through the λ/4 plate 240 brings about a 90° rotation of the linear polarization of the beam, which thereby assumes a linear polarization that is orthogonal to the linear polarization of the measurement beam M. The beam splitter 160 therefore performs a recombination of the measurement optical beam and of the reference optical beam and directs them, superimposed, along a detection optical path $P_D$ (common to a portion of the measurement optical path and to a portion of the reference optical path) towards the sensor arrangement S.

Both the measurement and reference optical beams are led through a cylindrical focusing lens 280, which is adapted to focus the collimated beam in just one direction, in particular the direction orthogonal to the illumination axis of the sensor arrangement, with the aim of concentrating the signal along this axis, thereby optimizing the illumination of the photodetectors, and arrive at a polarizing beam splitter 300 that performs the separation of the measurement optical beam M from the reference optical beam R on the basis of their polarization, directing the first thereof towards a first reflective element M1 and the second thereof towards a second reflective element M2; in this last case, by interposing a λ/2 plate 320 that is adapted to restore the original polarization. On account of this configuration, the first and the second reflective element M1, M2 direct the measurement optical beam and the reference optical beam towards the sensor arrangement S, respectively, and more precisely towards the common region of incidence of the sensor arrangement, at an angle of incidence $\alpha$. The angle of incidence $\alpha$ may advantageously be controlled within a preset range of values when the system is formed such that the reflective elements M1 and M2 are respectively moveable in translation along the axis of propagation of the relative optical beam and in rotation about an axis that is normal with respect to the incidence plane (dashed position in the figure).

As described above, the sensor arrangement S comprises a plurality of photodetector devices, each of which is adapted to emit a particular signal representative of the optical intensity incident thereon, and these signals are transmitted, as a whole, to processing means 350 configured for identifying a pattern of interference fringes F that forms on the common region of incidence C of the sensor arrangement by acquiring the overall incident optical power of the superimposed measurement optical beam and reference optical beam.

Preferably, the measurement optical path and the reference optical path comprise corresponding optical elements, and in particular the reference optical path comprises a reflective return element, the reflective and optical diffusion properties of which correspond to the reflective and optical diffusion properties of the surface of the material interposed in the measurement optical path as much as possible. Optical attenuator means and/or optical dispersion means may be provided if need be, which are adapted to balance out the intensity and the chromatic dispersion of the reference optical radiation reflected by said reflective return element with regard to the intensity of the measurement optical radiation reflected by the material being processed.

By means of the system in Fig. 5 or equivalent systems, a method is carried out for determining the separation distance between the working head 14 of a machine for laser processing a material and the surface of the material WP in the processing regions defined along a predetermined working trajectory T followed by the processing laser beam emitted by the head.

The method comprises generating a measurement beam of low coherence optical radiation M that is led towards a processing region through the working head 14, and - reflected or diffused by the surface of the material WP in the processing region - is led through the working head 14 towards the sensor arrangement S in a first direction of incidence.

When processing metal materials, it is possible to assume that the measurement optical beam is reflected or diffused at the first surface of the material. In certain cases, for example welding or additive manufacturing processes, instead of the surface of the solid to be welded (or of the substrate), it is necessary to measure the distance from the surface of the molten pool, which represents the first surface of the molten metal. The internal sub-surface layers of the material generate signals in non-metal and semi-transparent materials (ceramics, plastics, biological tissues, etc.), or in painted metals.

The measurement optical radiation beam M in particular travels along a measurement optical path from the source 100 to the sensor arrangement S, which includes two portions having a particular predetermined and invariant geometric length, respectively a first portion between the source 100 and the end of the working head 14 that is proximal to the material WP, and a second portion between the end of the working head 14 that is proximal to the material WP and the sensor arrangement S.

A reference beam R of said low coherence optical radiation is generated by the same source 100, which beam is led towards the sensor arrangement S in a second direction of incidence, at a predetermined angle of incidence with respect to the first direction of incidence of the measurement beam M. The reference beam R travels along a reference optical path $P_R$ having an optical length that is equivalent to the optical length of the measurement optical path $P_M$ in the nominal operating state, in which the distance between the working head 14 and the material WP corresponds to the predetermined nominal separation distance $D_{standoff\_nom}$.

The measurement beam M and the reference beam R are superimposed on the common region of incidence C of the sensor arrangement S along a preset illumination axis. The position of a pattern of interference fringes F between the measurement beam M and the reference beam R along the illumination axis on the common region of incidence C is detected by the processing means 350 and makes it possible, as described above, to determine the difference in optical length between the measurement optical path $P_M$ and the reference optical path $P_R$, which is indicative of the difference between (a) the current separation distance between the working head 14 and the surface of the material WP in the processing region, and (b) the preset nominal separation distance.

The method may be carried out in real time during a process in order to determine the separation distance between the working head and the current processing regions on the material, but also before or after the process, for example to qualify a piece to be processed or a process that has been carried out.

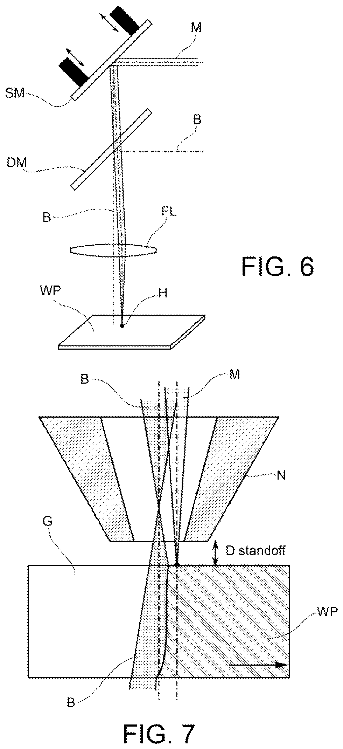

With reference to Fig. 6 and 7, an exemplary embodiment of the path of the processing laser beam B and of the measurement optical beam M inside the working head and the relative position of the processing laser beam B and of the measurement optical beam M in a cutting or drilling portion of the material WP is shown schematically.

Fig. 6 shows a reflective element that deflects the laser beam, such as a dichroic mirror, indicated by DM, which deflects the optical axis of propagation of the processing laser beam B from a head-entering direction to a direction of incidence on the material WP being processed. This is a configuration that is adopted in one embodiment of the working head comprising a lateral laser beam input. In this embodiment, the measurement optical radiation beam M is directed towards the measurement region of the material - passing through the dichroic mirror DM without substantial deflection - by means of a reflective optical scanning system SM, or folding mirror, the inclination of which is controlled, for example piezoelectrically, on the basis of the absolute value and of the direction of the rate of advancement of the working head along the working trajectory in order to control the position in which the measurement point intercepts the surface. Downstream of the reflective optical scanning system SM there is arranged a focusing lens FL, and therefore it is possible to control the position H in which the measurement point intercepts the surface of the material. As may be seen in the figure, the propagation direction of the measurement beam may be controlled by the inclination of the reflective optical scanning system SM so as not to be coaxially superimposed on the processing laser beam B, but to be different therefrom. A person skilled in the art will understand that a "dual" or "opposite" configuration is also possible, in which a dichroic mirror is provided, which is transparent to the processing laser beam but reflects the measurement beam coming from a lateral input.

Advantageously, in a machine for laser cutting, drilling or welding a material or for the additive manufacture of three-dimensional structures by means of a laser, in which the machine comprises a working head containing a nozzle for supplying a flow of an assist gas arranged near the material, the measurement optical radiation beam is led through the nozzle and directed towards a measurement region of the material that is coaxial with the current processing region or is in the vicinity of the current processing region, preferably in front thereof in accordance with the working trajectory.

Advantageously, in a machine for laser welding a material or for the additive manufacture of three-dimensional structures by means of a laser, in which the machine comprises a working head containing an output for the high-power processing laser beam, downstream of an optical system for focusing the laser beam, which system is arranged near to the material, the measurement optical radiation beam is led through the above-mentioned beam output and directed towards a measurement region of the material that is coaxial with the current processing region or is in the vicinity of said current processing region, preferably behind it in accordance with the working trajectory.

The incidence of the measurement beam M coaxially with the processing laser beam B is suitably used, for example, to assess the drilling depth, the welding height and/or depth and the height of the structured material during additive manufacture. The incidence of the measurement beam M in a set-back position with respect to the processing region is used to verify the welding quality or additive depositions. The incidence of the measurement beam M in a forward position with respect to the processing region is used for the early measurement of the separation distance of the head from the material during cutting and welding, or to identify the morphology of the surface of the material after the spatial scan, for example in order to track the welding joint along the working trajectory. The latter configuration is shown by way of example in Fig. 7, where N indicates the nozzle for supplying the assist gas, B indicates the processing laser beam incident in a current processing region of the material WP where a cutting operation is in progress according to a trajectory indicated by the arrow, which forms a groove G, and M indicates the measurement beam. In a cutting operation, the arrangement of the measurement beam M coaxially with the processing beam B would render the measurement extremely uncertain, since it would be taken at the cutting edge, where the wall of the groove in the material has a profile that may not be controlled, which depends on numerous processing parameters.

Improvements to the invention will be described in the present description that follows.

Advantageously, in the configuration in which the measurement and reference beams impinge on the common region of incidence of the sensor arrangement S, the angle of incidence $\alpha$ is controlled and extends to such an extent that the spatial frequency of the pattern of interference fringes is greater than the spatial frequency of the photodetectors in order to increase the range of measurable distances.

It is known in the art that, assuming that the measurement and reference beams propagate as plane waves, the total light intensity as a function of the x coordinate along the illumination axis of the sensor arrangement S, that is in the plane of the angle of incidence, may be approximated as:

$$I_{\mathrm{tot}}(x) \simeq I_1 + I_2 + 2\sqrt{I_1 I_2}|\gamma(x)|\cos(k_f x)\,,$$

where $I_1$ and $I_2$ are the intensities of the respective beams and $k_f$ is the wavenumber or spatial frequency of the pattern of interference fringes. With the angles of incidence of the measurement beam and of the reference beam with respect to the normal to the sensor arrangement indicated as $\alpha 1$ and $\alpha 2$, the spacing between the interference fringes is given by

$$\frac{2\pi}{k_f} = \frac{\lambda_0}{\sin(\alpha_1) + \sin(\alpha_2)}$$

and therefore a greater angle of inclination brings about a greater frequency of the pattern of interference fringes, and therefore a greater interference fringe density on the sensor arrangement.

According to the prior art, in order to respect the Nyquist sampling criterion and to avoid the phenomenon of aliasing or sub-sampling, the spatial frequency of the photodetectors, corresponding to the sampling pixel spatial frequency on the sensor arrangement, indicated by $k_p$, has to be at least two times greater than the frequency of the pattern of interference fringes $k_f$, that is the $k_f / k_p$ ratio would have to be smaller than 0.5.

The information relating to the difference in optical paths may be directly extracted from the position of the envelope of the pattern of interference fringes in the intensity profile of the optical radiation incident on the sensor arrangement. $N_p$ indicates the number of photodetector devices of the sensor arrangement that are illuminated by both the superimposed measurement beam and reference beam; the maximum path difference that may be measured is therefore

$$\Delta d_{\max} = N_p \frac{\lambda_0}{2} \frac{k_f}{k_p} \, .$$

whereby the measurement range is directly proportional to the number of illuminated photodetectors of the superimposed beams, which is a consequence of the resolution of the sensor arrangement and of the dimensions of the beams. The increase in the range of differences between the measurable paths is therefore obtainable by increasing the number of photodetector devices, which could introduce greater costs when forming the sensor arrangement and greater expenses when processing the signals originating therefrom. The above-mentioned range of measurable differences is also directly proportional to the $k_f / k_p$ ratio between the frequency of the pattern of interference fringes and the spatial frequency of the photodetectors. The $k_f / k_p$ ratio is dependent on the angle of incidence between the measurement and reference beams and on the spatial dimensions of the photodetectors; it is therefore necessary to achieve a balance between the inclination of the beams and the number of illuminated photodetectors.

The inventors have noted that, depending on the wavelength and the coherence length of the low coherence optical radiation used, several tens of interference fringes are typically visible in a pattern of interference fringes that forms in the common region of incidence of the sensor arrangement. Acquiring a high number of interference fringes across a wide measurement range while respecting the Nyquist criterion requires a large number of photodetectors, which brings about an excessive acquisition of information, since only the position of the envelope of the pattern of interference fringes is relevant for determining the difference between the measurement and reference paths. As a result, the inventors have explored the possibility of demodulating the patterns of interference fringes at smaller and smaller spatial frequencies, which are obtainable with greater and greater incidence angles between the measurement beam and the reference beam, such that the frequency of the pattern of interference fringes becomes greater than the spatial frequency of the photodetectors - a condition that brings about the occurrence of the aliasing phenomenon.

Taking into consideration a constant number of photodetectors, this approach makes it possible to increase the measurement range without losing information, simply at the cost of a reduced contrast of the interference fringes since a plurality of fringes are detected by a single photodetector.

It may be proven from the prior art that the contrast v of the interference fringes is dependent on the aliasing factor $k_f / k_p$ according to the relationship:

$$\mathcal{V} \simeq \left| \operatorname{sinc}(k_f / k_p) \right|$$

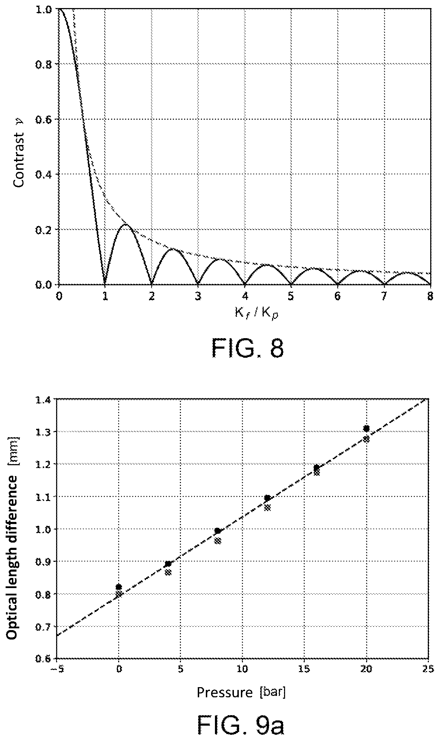

and is zero at integer multiples of the spatial frequency of the photodetectors $k_p$, as shown in Fig. 8.

Advantageously, in order to have a locally maximum contrast, the spatial frequency of the pattern of interference fringes has to be greater than the spatial frequency of the photodetectors and different from the multiples of the spatial frequency of the photodetectors, preferably close to a half-integer multiple of said spatial frequency of the photodetectors.

In fact, as is clear from the graph in Fig. 8, which shows the trend, as a continuous line, of the contrast v between interference fringes, which trend is calculated as a function of the $k_f / k_p$ ratio, the local maxima are close to the half-integer multiples of the spatial frequency of the photodetectors, but with a rapid decline in the maximum contrast (qualitatively indicated in the figure by the non-continuous line).

Advantageously, it is possible to select angles of incidence between the measurement beam and the reference beam so as to obtain a $k_f / k_p$ ratio that is equal to approximately 1.5 (or approximately 2.5, approximately 3.5, etc.).

The invention described above may also be improved as described in the following.

In general, the propagation characteristics of the measurement optical radiation beam are influenced by the physical parameters (temperature, pressure, mechanical deformation) of the transmission means in which said beam propagates, essentially since the refractive index of the transmission means may vary depending on these parameters.

In a machine for laser cutting, drilling or welding a material or for the additive manufacture of three-dimensional structures by means of a laser, comprising a working head bearing a nozzle for supplying a flow of assist gas, which wants to determine the distance between the nozzle and the material being processed, the measurement optical radiation beam is made to propagate through the nozzle. Therefore, the propagation characteristics of the measurement beam are influenced by the pressure of the assist gas.

Fig. 9a shows a dependency relationship between the result of the interferometry reading, expressed in terms of difference in optical length between the measurement optical path $P_M$ and the reference optical path $P_R$, and the pressure of an assist gas, which forms along a portion of the measurement optical path (typically in the chamber of the nozzle for supplying the assist gas), for a predetermined separation distance between (the nozzle of) the working head and the surface of the material of 1 mm. As can be seen from the experimental values conducted in two measurements and from the interpolation curve that is discontinuous in portions, the dependency is virtually linear.

In order to improve the accuracy of the method of the invention, the determination of the difference in optical length between the measurement optical path and the reference optical path may therefore preferably be based on a normalized optical length of the measurement optical path, which length is calculated from the geometric length and from a normalized refractive index of the portion of said measurement optical path that passes through the chamber of the assist gas, or the nozzle. The normalized refractive index is calculated as a function of the pressure of the assist gas in said chamber, according to a predetermined nominal dependency relationship between the refractive index of the assist gas and the pressure of said gas.

For these reasons, the pressure of the assist gas in the assist gas chamber of the nozzle may be directly detected by pressure sensors facing said chamber, or this may be derived indirectly from a measurement of the change in the local position of a surface of an optical element for protecting or delimiting the chamber of the assist gas along the axis of the measurement beam, according to a predetermined nominal relationship between the position of the surface of said optical element relative to a particular predetermined nominal position and the pressure of the assist gas.

The measurement of the change in the local position of said surface of the optical element is determined, for example, as a function of the difference in length between (a) a supplementary measurement optical path referring to said optical element, including at least one of (i) a first portion between the source of the measurement beam and the optical element on a first surface on which said measurement beam impinges with partial back-reflection and (ii) a second portion between the surface of the material being processed and the optical element on a second surface on which said measurement beam impinges with partial back-reflection, and (b) a particular supplementary reference optical path having an optical length that is equal to the optical length of the supplementary measurement optical path of said optical element in a nominal operating state that includes partial back-reflection of the measurement beam at said first or second surface of said optical element when this is in a predetermined nominal position along the axis of the processing laser beam, for a predetermined reference pressure value for the assist gas in the assist gas chamber of the nozzle.

Fig. 9b shows a dependency relationship between the result of the interferometric reading, expressed in terms of change in the local position of a surface of an optical element for protecting or delimiting the chamber of the assist gas along the axis of the measurement beam, and the trend (increasing, decreasing) for the pressure of the assist gas in the above-mentioned chamber. The curve A represents the change in the local position of a surface of the optical element for protecting or delimiting the chamber of the assist gas as the pressure inside the chamber increases. The curve B represents the change in the local position of a surface of the optical element for protecting or delimiting the chamber of the assist gas as the pressure inside the chamber decreases.

In more general terms, the determination of the difference in optical length between the measurement optical path and the reference optical path may be based on a normalized optical length of the measurement optical path, which is calculated from the geometric length and from a normalized refractive index of the transmission means of said measurement optical path, or of a transmission means of a portion of said measurement optical path, which refractive index is calculated on the basis of the temperature of said portion of the optical path according to a predetermined nominal relationship.

Alternatively or in combination with the above, the determination of the difference in optical length between the measurement optical path and the reference optical path may be based on a normalized optical length of the measurement optical path which is calculated from the normalized geometric length and from a refractive index of a material transmission means of a portion of said measurement optical path, in which the normalized geometric length is calculated on the basis of the mechanical deformation of said material transmission means according to a predetermined nominal relationship.

Even more advantageously, the technique that forms the subject matter of the invention makes it possible to determine a disturbance in the current optical length of at least one portion of the measurement optical path with respect to the current optical length of a corresponding portion of the reference optical path, and to correct the value determined for the separation distance between the working head and the surface of the material on the basis of said disturbance, for example by subtracting the disturbance measurement from the measurement of the processing distance (possibly after applying a correction factor). The disturbance forms, for example, as a result of the change in at least one physical parameter of the transmission means within which the measurement optical path extends.

For these reasons, the measurement beam that impinges on the sensor arrangement S comprises at least one measurement calibration beam that results from a measurement calibration optical path being traveled along, in which the measurement beam is reflected or diffused by at least one back-reflecting surface of a static optical element interposed along the measurement optical path, and in which the reference beam that impinges on the sensor arrangement S comprises a particular reference calibration beam that results from a reference calibration optical path being traveled along, which has an optical length that is equivalent to the optical length of the measurement calibration optical path in a nominal calibration operating state in which the geometric length and the refractive index of the transmission means of the measurement calibration optical path are equal to the geometric length and to the refractive index of the transmission means of the reference calibration optical path within a predetermined tolerance range. The static optical element may, for example, be the optical focusing system 16 of the laser beam.

The determination of the disturbance in the current optical length of at least one portion of the measurement optical path includes the following steps:

- Superimposing the measurement calibration beam and the reference calibration beam on a common region of incidence of the sensor arrangement S along the illumination axis;
- Detecting the position of a pattern of interference fringes between the measurement calibration beam and the reference calibration beam along the illumination axis in the common region of incidence; and
- Determining a difference in optical length between the measurement calibration optical path and the reference calibration optical path - indicative of a difference between (a) the geometric length of the measurement calibration optical path and the geometric length of the reference calibration optical path, and/or (b) the refractive index of the measurement calibration optical path and the refractive index of the reference calibration optical path - respectively on the basis of the position of the pattern of interference fringes along the axis of illumination of the region of incidence. The difference in optical length between the measurement calibration optical path and the reference calibration optical path is indicative of the above-mentioned disturbance in the current optical length of at least one portion of the measurement optical length.

In the event that the position of the pattern of interference fringes is detected, a predetermined reference position of the pattern of interference fringes - corresponding to the condition in which the optical length of the measurement and reference calibration optical paths are equal - may, purely by way of non-limiting example, be a middle position or an end position along the illumination axis of the photodetectors.

Another solution for increasing the measurable difference range between the lengths of the measurement and reference paths by means of the technique that forms the subject matter of the invention is to make use of partial back-reflections at the surfaces of at least one optical element interposed along the optical path of the processing laser beam and of the measurement optical radiation beam, or to make use of reference optical paths having predetermined lengths that differ from the length of the main reference optical path.

In one embodiment, the measurement beam that impinges on the sensor arrangement S comprises a main measurement beam that results from a main measurement optical path being traveled along, with reflection from the surface of the material in the processing region, and transmission through each optical element interposed along the optical path of the high-power processing laser beam, and at least one additional multiplexed measurement beam that results from an additional measurement optical path being traveled along, with reflection from the surface of the material being processed and which has a greater geometric length than the geometric length of the main measurement optical path, for example since it includes at least one partial back-reflection at the surface of an optical element interposed along the optical path of the high-power processing laser beam and of the measurement optical radiation beam.

In this embodiment, the method of the invention is based on the detection of the position of an additional pattern of interference fringes on the common region of incidence C of the sensor arrangement S, determined by the interference between the additional measurement beam and the reference beam. The additional pattern of interference fringes comprises, for example, (i) a peak or maximum intensity of the envelope of the optical radiation that is different from, for example lower than, the peak or maximum intensity of the envelope of the optical radiation of the main pattern of interference fringes between the main measurement beam and the reference beam, or (ii) an intrinsic position of the intensity envelope of the optical radiation that is different from the intrinsic position of the intensity envelope of the optical radiation of the main pattern of interference fringes, in the case in which it appears at the same time as the main pattern of interference fringes.

Fig. 10a is a graph showing the signals emitted by the photodetectors along the illumination axis of the sensor arrangement S (vertical axis), which signals are indicative of the intensity of the envelope of the pattern of interference fringes that forms on the common region of incidence. In particular, the figure shows the interferometric signals and therefore the spatial position of the pattern of interference fringes along the illumination axis (vertical axis) as a function of the separation distance between the working head and the material facing it (horizontal axis). For example, such a graph may be generated in a calibration step by providing a fixed length of the reference optical path and continuously varying the relative position between the working head and the surface of the material - that is the separation distance of the working head from the surface of the material - along the z axis, and by acquiring interferometric signal readings as a function of predetermined discrete values for the separation distance.

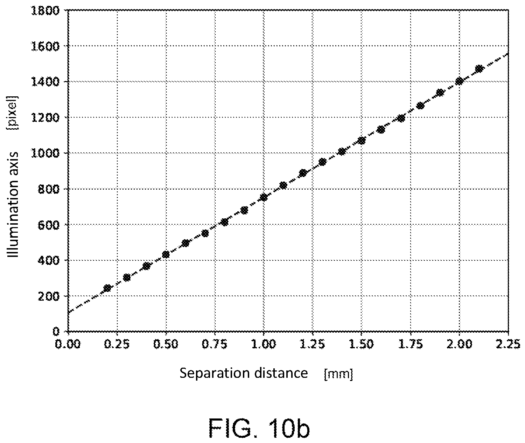

The figure shows the acquisition of a strong interferometric signal in the aliasing state and the translation of the envelope of the pattern of interference fringes over a range of approximately 2 mm (corresponding to approximately 1500 pixels) according to an approximately linear trend of the peak of the signal indicative of the pattern of interference fringes, shown in Fig. 10b. The sensitivity may be defined as the separation distance corresponding to the dimensions of a photodetector or pixel of the region of incidence, in this case 1.5 um/pixel. The translation of the envelope of the pattern of interference fringes over the entire illumination axis of the sensor arrangement makes it possible to determine a separation distance between the working head and the surface of the material of from approximately 0.25 mm to approximately 2 mm.

In the circled regions, corresponding additional multiplexed signals are marked that are indicative of the identification of respective additional patterns of interference fringes along the illumination axis of the sensor arrangement, which result from an additional measurement or reference optical path being traveled along, which has a geometric length that is greater than the geometric length of the main measurement or reference optical path, which includes at least one partial back-reflection at the surface of an optical element interposed along the optical path of the processing laser beam.

In the case in which several separate operating ranges are not facing or superimposed on the sensor arrangement but are separated to a sufficient degree in order to alternatively show the respective interference fringes, the selection of the pattern of interference fringes is automatic, as a result of reaching a separation distance between the working head and the material in which only one of the main measurement beam and the additional measurement beam interferes with the reference beam so as to produce a pattern of interference fringes that falls on the surface of the sensor arrangement S.

In the previous condition, a difference in optical length is therefore determined between the additional measurement optical path and the reference optical path, which is indicative of a difference between (i) the current separation distance between the working head and the surface of the material in the processing region, and (ii) the predetermined nominal separation distance as a function of the position of the additional pattern of interference fringes along the illumination axis of the region of incidence.

In a different embodiment, the reference beam that impinges on the sensor arrangement S comprises a main reference beam that results from a main reference optical path being traveled along and at least one additional multiplexed reference beam that results from an additional reference optical path being traveled along, which has a different geometric length to the geometric length of the main reference optical path.

In this embodiment, the method of the invention is based on the detection of the position of an additional pattern of interference fringes on the common region of incidence of the sensor arrangement S, determined from the interference between the measurement beam and the additional reference beam.

In this case, too, the additional pattern of interference fringes comprises, for example, (i) a peak or maximum intensity of the envelope of the optical radiation that is different from, for example lower than, the peak or maximum intensity of the envelope of the optical radiation of the main pattern of interference fringes between the main measurement beam and reference beam, or (ii) an intrinsic position of the intensity envelope of the optical radiation that is different from the intrinsic position of the intensity envelope of the optical radiation of the main pattern of interference fringes, in the event that it appears at the same time as the main pattern of interference fringes.

In the event that several separate operating ranges are not facing or superimposed on the sensor arrangement, but are separated to a sufficient degree in order to alternatively show the respective interference fringes, the pattern of interference fringes is selected in order to select the additional reference path.

In the above condition, a difference in optical length is therefore determined between the measurement optical path and the additional reference optical path, which is indicative of a difference between (i) the current separation distance between the working head and the surface of the material in the processing region, and (ii) the predetermined nominal separation distance as a function of the position of the additional pattern of interference fringes along the illumination axis of the region of incidence.

As can be understood from Fig. 10a, a sensor arrangement S having an illumination axis having a smaller extension, for example half the extension adopted for the measurements in question, would, however, permit the detection of the separation distance between the working head and the surface of the material in the same range of values, 0.25-2 mm, relying on the signal reading that is indicative of the main pattern of interference fringes in a first range and on the signal reading that is indicative of the additional pattern of interference fringes in a second range.

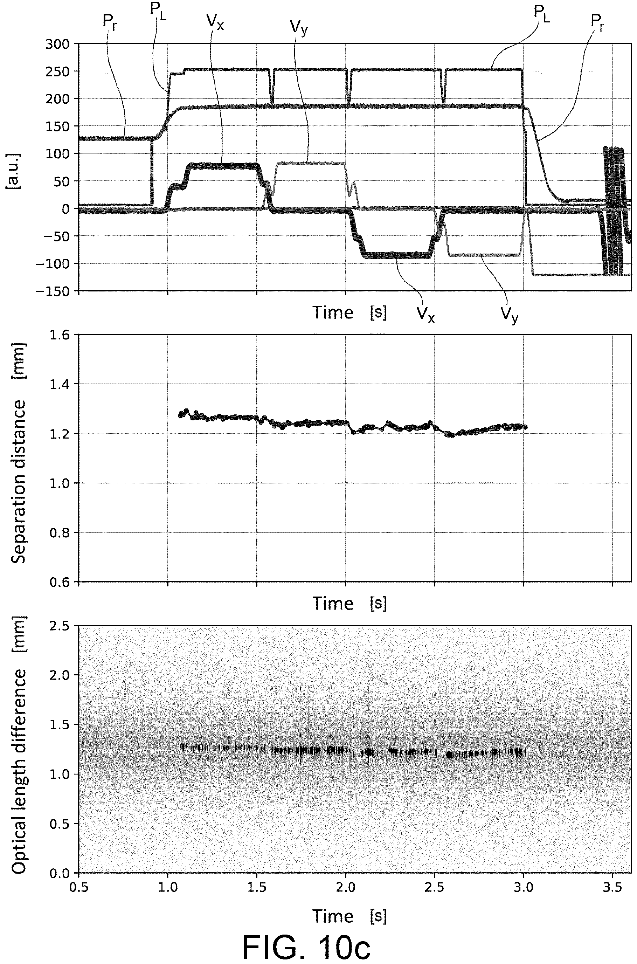

Fig. 10c shows a series of graphs representing a measurement carried out during a cutting process, in the example a process of cutting a square incision having a width of 40 mm in a flat plate made of mild steel having a thickness of 3 mm, operating with the working head at a nominal distance from the plate that may vary between 1.3 and 1.2 mm during the process.

The top graph shows the trend over time of a series of process parameters. In particular, the curves indicated

as $V_x$ and $V_y$ represent the translational speed of the cutting head in the orthogonal directions x and y on the cutting plane, the curve indicated as $P_L$ represents the optical intensity of the processing laser beam and the curve Pr represents the pressure of the assist gas. The middle graph shows the trend measured for the real separation distance between the working head and the piece. The bottom graph shows the trend over time of the interference fringes obtained by means of the detection technique in the space domain.

The accurate determination of the separation distance between the working head and the surface of the material in a processing region, be it a current processing region or a calibration processing region, suitably allows the unit ECU for controlling the process of the laser processing machine to also use feedback for the correction or the control of the processing distance or other processing parameters, for example acting on the movement actuator means 40 in order to control the movement of the working head, for example along the Z axis towards or away from the material, as a function of the result of the interferometric measurement, for example for keeping the distance between the working head and the material around a predetermined value as a function of a predetermined processing project. This is particularly useful for improving the efficiency of a cutting process, for example. Alternatively or in addition, the determination of the separation distance between the working head and the surface of the material allows the unit ECU for controlling the process to use feedback to control the movement of the working head along the axes alternative to the Z axis by acting on the movement actuator means 40, after spatial scanning, for example in order to maintain the trajectory of the working head along a predetermined path adapted to the morphology of the surface being processed, therefore also with movement in translation or an inclination with respect to the surface. This is particularly useful for optimizing a welding process, for example as a result of tracking a welding joint.

It is noted that the design proposed in the above discussion for this invention is of a purely exemplary nature and does not limit this invention. An expert in the field will be able to easily implement this invention in various embodiments, which do not depart from the principles set out here and therefore fall under the present patent which is defined by the claims.

This is particularly applicable with regard to the possibility of using different low coherence optical radiation wavelengths to those cited, or measurement and reference optical paths having interposed optical elements that are different from those illustrated in Fig. 5 purely by way of non-limiting example.

Of course, without prejudice to the principle of the invention, the embodiments and the implementation details may be modified greatly with respect to what has been described and illustrated purely by way of non-limiting example, without thereby departing from the scope of protection of the invention defined by the attached claims.

## Claims

1.  Method for determining the separation distance between a working head in a machine for laser processing of a material, operating by means of a high power processing laser beam emitted by said head and led along a working trajectory on the material comprising a succession of working areas, and the surface of the material at said working areas, comprising the steps of:

    - generating a measurement low coherence optical radiation beam, leading said measuring beam towards a working area through said working head, and leading the measuring beam reflected or diffused from the surface of the material in said working area through said head and towards optical interferometric sensor means along a first direction of incidence, in which the measuring beam travels a measurement optical path from a respective source to said optical interferometric sensor means including a first section comprised between said source and the working head and a second section comprised between said working head and the interferometric sensor means having a respective predetermined and invariant geometric length;
    - generating a reference beam of said low coherence optical radiation, and leading said reference beam towards said optical interferometric sensor means along a second direction of incidence, at a predetermined angle of incidence with respect to the first direction of incidence of said measurement beam, wherein the reference beam travels a reference optical path whose optical length is equivalent to the optical length of the measurement optical path in a nominal operating condition in which the distance between the working head and the surface of the material corresponds to a predetermined nominal separation distance;
    - superimposing the measurement beam and the reference beam on a common region of incidence of said optical interferometric sensor means, along a predetermined illumination axis;
    - detecting the position of a pattern of interference fringes between the measurement beam and the reference beam along said illumination axis on said common region of incidence, wherein the extension of said pattern of interference fringes along the illumination axis corresponds to the coherence length of said low coherence optical radiation; and
    - determining a difference in optical length between the measurement optical path and the reference optical path - indicative of a difference between the current separation distance between the working head and the surface of the material at the working area and a predetermined nominal separation distance - as a function of the position of said pattern of interference fringes along said illumination axis of said region of incidence.

2. The method of claim 1, wherein the position of the pattern of interference fringes along the illumination axis is the intrinsic position of the envelope of the intensity of the optical radiation of said pattern of interference fringes, the intrinsic position of the envelope of the intensity of the optical radiation of said pattern of interference fringes being the position of the peak or maximum of the envelope of intensity of said optical radiation.

3. The method according to claim 1 or 2, wherein said optical interferometric sensor means comprise an arrangement of photodetectors along said illumination axis, and the angle of incidence is controlled in such a way that the spatial frequency of said pattern of interference fringes is greater than the spatial frequency of the photodetectors and different from the multiples of the spatial frequency of the photodetectors, preferably close to a half-integer multiple of said spatial frequency of the photodetectors.

4. The method according to any one of the preceding claims in a machine for laser cutting, drilling or welding of a material or for the additive manufacturing of three-dimensional structures by laser, wherein said machine comprises a working head having a nozzle for dispensing a flow of an assist gas, arranged proximate to said material, and the measurement optical radiation beam is led through said nozzle and directed towards a measuring region of the material which is coaxial to said current working area or adjacent to said current working area, preferably in front of it along the working trajectory.

5. The method according to any one of claims 1 to 3 in a machine for laser welding of a material or additive manufacturing of three-dimensional structures by laser, wherein said machine comprises a working head which has an output of the processing laser beam arranged in proximity of said material, and the measuring optical radiation beam is led through said output of the processing beam and directed towards a measuring region of the material which is coaxial to said working area current or adjacent to said current working area, preferably behind it along the working trajectory.

6. The method according to claim 4 or 5, wherein the measurement optical radiation beam is directed towards said material measurement region by means of an optical scanning system whose inclination is controlled according to the absolute value and the direction of the forward speed of the working head along the working path.

7. The method according to any one of the preceding claims, wherein the measurement optical path and the reference optical path include corresponding optical elements, the reference optical path including a reflective return element corresponding to the surface of the material interposed in the measurement optical path, and optical attenuator means adapted to balance the intensity of the reference optical radiation reflected by said reflective return element with respect to the intensity of the measurement optical radiation reflected by the material being processed, and wherein said measurement optical path and said reference optical path originate from a common source, are separated by means of beam splitting means, led separately to the surface of the material being processed and to said reflective return element, respectively, and gathered in a detection optical path, in the detection optical path the measurement beam being separated from the reference beam, said beams being directed with controllable orientation towards said common region of incidence of the optical interferometric sensor means, the controllable orientation determining the angle of incidence between the measurement beam and the reference beam.

8. The method according to claim 1, wherein in a machine for laser cutting, drilling or welding of a material, or for the additive manufacturing of three-dimensional structures by laser comprising a working head having a nozzle for dispensing a flow of an assist gas in which the measurement optical radiation beam is led through said nozzle, the determination of the difference in optical length between the measurement optical path and the reference optical path is based on a normalized optical length of the measurement optical path which is calculated starting from the geometric length and from a normalized refractive index of a portion of said measurement optical path which passes through a chamber of the assist gas of the nozzle, which is calculated as a function of the pressure of the assist gas in said chamber, according to a predetermined nominal relationship of dependence of the refractive index of the assist gas upon the pressure of said gas.

9. The method according to claim 1, wherein the determination of the difference in optical length between the measurement optical path and the reference optical path is based on a normalized optical length of the measurement optical path which is calculated from the geometric length and from a normalized refractive index of a transmission medium of a portion of said measurement optical path, which is calculated as a function of the temperature, pressure or other physical parameter of said at least a portion of the optical path according to a predetermined nominal relationship of dependence of the refractive index upon the temperature, pressure or other physical parameter of the transmission medium of the measurement optical radiation beam, or

wherein the determination of the difference in optical length between the measurement optical path and the reference optical path is based on a normalized optical length of the measurement optical path which is calculated starting from the normalized geometric length and from a refractive index of a material transmission medium of a portion of said measurement optical path, in which the normalized geometric length is calculated as a function of the mechanical deformation of said material transmission medium according to a predetermined nominal relationship of dependence of the geometric length upon the mechanical deformation of the material transmission medium of the measurement optical radiation beam.

10. The method according to any one of the preceding claims, comprising determining a perturbation of the current optical length of at least a portion of the measurement optical path with respect to the current optical length of a corresponding portion of the reference optical path, and correcting the determined value of the separation distance between the working head and the surface of the material on the basis of said perturbation,

wherein the measurement beam incident on said optical interferometric sensor means comprises at least one calibration measurement beam which results from the travel of a calibration measurement optical path, wherein said measurement beam is reflected or diffused by at least one retro-reflective surface of a static optical element interposed along the measurement optical path, and wherein the reference beam incident on said optical interferometric sensor means comprises a respective calibration reference beam which results from the travel of a calibration reference optical path having an optical length equivalent to the optical length of the calibration measurement optical path in a nominal operating condition of calibration in which the geometric length and the refractive index of the transmission medium of the calibration measurement optical path are equal to the geometric length and the refractive index of the transmission medium of the calibration reference optical path within a predetermined tolerance range,

and wherein determining the perturbation of the current optical length of at least a portion of the measurement optical path includes:

- superimposing the calibration measurement beam and the calibration reference beam on a common region of incidence of said optical interferometric sensor means, along a predetermined illumination axis;
- detecting the position of a pattern of interference fringes between the calibration measurement beam and the calibration reference beam along said illumination axis on said common region of incidence; and
- determining a difference in optical length between the calibration measurement optical path and the calibration reference optical path - indicative of a difference between the geometric length of the calibration measurement optical path and the geometric length of the calibration reference optical path, and/or the refractive index of the calibration measurement optical path and the refractive index of the calibration reference optical path - respectively depending on the position of said pattern of interference fringes along said illumination axis of said region of incidence,

said optical length difference between the calibration measurement optical path and the calibration reference optical path being indicative of the aforementioned disturbance in the current optical length of at least a portion of the measurement optical path.

11. The method according to claim 8, wherein the pressure of the assist gas in the assist gas chamber of the nozzle is detected directly by means of pressure sensors facing said chamber, or

wherein the pressure of the assist gas in the assist gas chamber of the nozzle is derived indirectly from a measure of the variation in the local position of a surface of an optical element of protection or delimitation of the assist gas chamber along the axis of the measurement beam according to a predetermined nominal relationship between the position of the surface of said optical element of protection or delimitation of the assist gas chamber with respect to a respective predetermined nominal position and the pressure of the assist gas, the measurement of the variation of the local position of said surface of the optical element of protection or delimitation of the assist gas chamber being determined as a function of the difference in length between an additional measurement optical path for measuring said optical element of protection or delimitation including at least one among a first section between a source of the measurement beam and the optical element of protection or delimitation on a first surface of which said measurement beam impinges with partial back-reflection and a second section between the surface of the material being processed and the optical element of protection or delimitation on a second surface of which said measuring beam impinges with partial back-reflection, and a respective additional reference optical path having an optical length equal to the optical length of the additional measurement optical path of said optical element of protection or delimitation in a nominal operating condition including a partial back-reflection of the measurement beam to said first or second surface of said optical element of protection or delimitation when it is at said predetermined nominal position along the axis of the processing laser beam for a predetermined reference pressure value of the assist gas in the assist gas chamber of the nozzle.

12. The method according to any one of the preceding claims, wherein the measurement beam incident on said optical interferometric sensor means comprises a main measurement beam which results from the travel of a main measurement optical path with reflection from the surface of the material in the working area and with transmission through each optical element interposed along the optical path of the high-power processing laser beam, and at least one additional multiplexed measurement beam which results from the travel of an additional measurement optical path, with reflection from the surface of the material being processed and having a geometric length greater than the geometric length of said main measurement optical path, which includes at least a partial back-reflection at the surface of an optical element interposed along the optical path of the high power processing laser beam,

the method comprising the steps of:

- detecting, on said common region of incidence, the position of an additional pattern of interference fringes having tit a peak or maximum of intensity of the optical radiation different from the peak or maximum of intensity of the optical radiation of the main pattern of interference fringes between the main measurement beam and the reference beam, or an intrinsic position of the envelope of the intensity of the optical radiation offset from the intrinsic position of the envelope of the intensity of the optical radiation of the main pattern of interference fringes; and
- determining a difference in optical length between the additional measurement optical path and the reference optical path - indicative of a difference between the current separation distance between the working head and the surface of the material at the working area and the predetermined nominal separation distance - as a function of the position of said additional pattern of interference fringes along said illumination axis of said region of incidence,
or

wherein the reference beam incident on said optical interferometric sensor means comprises a main reference beam which results from the travel of a main reference optical path and at least one additional multiplexed reference beam which results from the travel of an additional reference optical path having a geometric length different from the geometric length of said main reference optical path,
the method comprising the steps of:

- detecting on said common region of incidence the position of an additional pattern of interference fringes having tit a peak or maximum of intensity of the optical radiation different from the peak or maximum of intensity of the optical radiation of the main pattern of interference fringes between the measuring beam and the main reference beam, or an intrinsic position of the envelope of the intensity of the optical radiation offset from the intrinsic position of the envelope of intensity of the optical radiation of the main pattern of interference fringes; and
- determining a difference in optical length between the measurement optical path and the additional reference optical path - indicative of a difference between the current separation distance between the working head and the surface of the material at the working area and the predetermined nominal separation distance - as a function of the position of said additional pattern of interference fringes along said illumination axis of said region of incidence.

13. A method for controlling the relative position between a working head of a machine for laser processing of a material, operating by means of a high power processing laser beam emitted by said head and led along a working path on the material comprising a succession of working areas, and the material at said working areas, **characterized in that** it includes carrying out a method for determining the separation distance between the working head and the surface of the material according to any one of claims 1 to 12, and moving the working head towards or away from the material or in translation or inclination relative to the surface as a function of a predetermined working design and the determined separation distance between the working head and the surface of the material.

14. A system for determining the separation distance (d) between a working head (14) in a machine for laser processing of a material (WP), operating by means of a high power processing laser beam (B) emitted by said head (14) and led along a working trajectory (T) on the material (WP) comprising a succession of working areas, and the surface of the material (WP) at said working areas, comprising:

- means (100) for generating a measurement low coherence optical radiation beam (M);
- means for propagation of said measurement beam (M) adapted to lead said measurement beam (M) towards a working area through said working head (14), and for leading the measurement beam (M) reflected or diffused by the surface of the material (WP) in said working area through said head (14) and towards optical interferometric sensor means (S) along a first direction of incidence, in which the measurement beam (M) travels a measurement optical path ($P_M$) from a respective source (100) to said optical interferometric sensor means (S) including a first section between said source (100) and the working head (14) and a second section between said working head (14) and the interferometric sensor means (S), having a respective predetermined and invariant geometric length;
- means (100) for generating a reference beam (R) of said low coherence optical radiation;
- means for propagation of said reference beam (R), adapted to lead said reference beam (R) towards said optical interferometric sensor means (S) along a second direction of incidence, at a predetermined angle of incidence with respect to the first direction incidence of said measurement beam (M), wherein the reference beam (R) travels a reference optical path ($P_R$) of optical length equivalent to the optical length of the measurement optical path ($P_M$) in a nominal operating condition in which the distance (d) between the working head (14) and the surface of the material (WP) corresponds to a predetermined nominal separation distance;
wherein the means for propagation of the measurement beam (M) and the means for propagation of the reference beam (R) are arranged to superimpose the measurement beam (M) and the reference beam (R) on a common region of incidence (C) of said optical interferometric sensor means (S), along a predetermined illumination axis (x);
- means for detecting the position of a pattern of interference fringes (F) between the measurement beam (M) and the reference beam (R) along said illumination axis (x) on said common region of incidence (C), wherein the extension of said pattern of interference fringes (F) along the illumination axis (x) corresponds to the coherence length of said low coherence optical radiation; and
- processing means (350) arranged to determine a difference in optical length between the measurement optical path ($P_M$) and the reference optical path ($P_R$) - indicative of a difference between (a) the current separation distance (d) between the working head (14) and the surface of the material (WP) at the working area and (b) a predetermined nominal separation distance - as a function of the position of said pattern of interference fringes (F) along said illumination axis (x) of said region of incidence (C).

15. Machine for laser processing of a material, operating by means of a high-power processing laser beam (B) emitted by a working head (14) and led along a working trajectory (T) on the material (WP) comprising a succession of working areas, and including means for controlling the relative position between said working head (14) and said material (WP), **characterized in that** it comprises a system for determining the separation distance (d) between said working head (14) and the surface of the material (WP) at said working areas according to claim 14, arranged to carry out a method according to any one of claims 1 to 12, said means for controlling the relative position between said working head (14) and said material (WP) acting according to a predetermined working design and the determined separation distance (d) between the working head (14) and the surface of the material (WP).

**Patentansprüche**

1. Verfahren zum Bestimmen des Abstands zwischen einem Bearbeitungskopf in einer Maschine zum Laserbearbeiten eines Materials, die mittels eines Hochleistung-Bearbeitungslaserstrahls arbeitet, der durch den Kopf emittiert wird und entlang einer Bearbeitungsbahn auf das Material geleitet wird, wobei die Bearbeitungsbahn eine Abfolge von Bearbeitungsbereichen umfasst, und die Oberfläche des Materials in den Bearbeitungsbereichen, wobei das Verfahren folgende Schritte umfasst:

- Erzeugen eines Messstrahls mit optischer Strahlung mit geringer Kohärenz, Leiten des Messstrahls durch den Bearbeitungskopf zu einem Bearbeitungsbereich und Leiten des von der Oberfläche des Materials in dem Bearbeitungsbereich reflektierten oder gestreuten Messstrahls durch den Kopf zu optischen interferometrischen Sensormitteln entlang einer ersten Einfallsrichtung, in der der Messstrahl sich durch einen optischen Messweg von einer jeweiligen Quelle zu den optischen interferometrischen Sensormitteln bewegt, der einen ersten Abschnitt zwischen der Quelle und dem Bearbeitungskopf und einen zweiten Abschnitt zwischen dem Bearbeitungskopf und den interferometrischen Sensormitteln umfasst, aufweisend eine vorbestimmte und unveränderliche geometrische Länge;

- Erzeugen eines Referenzstrahls der optischen Strahlung mit geringer Kohärenz und Leiten des Referenzstrahls zu den optischen interferometrischen Sensormitteln entlang einer zweiten Einfallsrichtung unter einem vorbestimmten Einfallswinkel in Bezug auf die erste Einfallsrichtung des Messstrahls, wobei der Referenzstrahl sich durch einen Referenzweg bewegt, dessen optische Länge der optischen Länge des optischen Messwegs in einer Nominalbetriebsbedingung entspricht, in der der Abstand zwischen dem Bearbeitungskopf und der Oberfläche des Materials einem vorbestimmten Nominalabstand entspricht;

- Überlagern des Messstrahls und des Referenzstrahls auf einem gemeinsamen Einfallsbereich der optischen interferometrischen Sensormittel entlang einer vorbestimmten Beleuchtungsachse;

- Erfassen der Position eines Musters von Interferenzstreifen zwischen dem Messstrahl und dem Referenzstrahl entlang der Beleuchtungsachse auf dem gemeinsamen Einfallsbereich, wobei die Erweiterung des Musters von Interferenzstreifen entlang der Beleuchtungsachse der Kohärenzlänge der optischen Strahlung mit geringer Kohärenz entspricht; und

- Bestimmen eines Unterschieds in der optischen Länge zwischen dem Messweg und dem Referenzweg, der auf einen Unterschied zwischen dem aktuellen Abstand zwischen dem Bearbeitungskopf und der Oberfläche des Materials im Bearbeitungsbereich und einem vorbestimmten Nominalabstand hinweist, in Abhängigkeit von der Position des Musters von Interferenzstreifen entlang der Beleuchtungsachse des Einfallsbereichs.

2. Verfahren nach Anspruch 1, wobei die Position des Musters von Interferenzstreifen entlang der Beleuchtungsachse die eigene Position der Hüllkurve der Intensität der optischen Strahlung des Musters von Interferenzstreifen ist, wobei die eigene Position der Hüllkurve der Intensität der optischen Strahlung des Musters von Interferenzstreifen die Position des Hohepunkts oder Maximums der Hüllkurve der Intensität der optischen Strahlung ist.

3. Verfahren nach Anspruch 1 oder 2, wobei die optischen interferometrischen Sensormittel eine Anordnung von Photodetektoren entlang der Beleuchtungsachse umfassen und der Einfallswinkel so gesteuert wird, dass die räumliche Frequenz des Musters von Interferenzstreifen größer als die räumliche Frequenz der Photodetektoren ist und von den Vielfachen der räumlichen Frequenz der Photodetektoren verschieden ist, vorzugsweise nahe einem halbganzzahligen Vielfachen der räumlichen Frequenz der Photodetektoren ist.

4. Verfahren nach einem der vorangehenden Ansprüche in einer Maschine zum Laserschneiden, Bohren oder Schweißen eines Materials oder zum additiven Fertigen von dreidimensionalen Strukturen mittels Laser, wobei die Maschine einen Bearbeitungskopf umfasst, der eine Düse zum Ausgeben eines Hilfsgasstroms aufweist, die in der Nähe des Materials angeordnet ist, und der Messstrahl mit der optischen Strahlung durch die Düse geleitet wird und zu einem Messbereich des Materials gerichtet wird, der sich koaxial zu dem aktuellen Bearbeitungsbereich oder angrenzend an dem aktuellen Bearbeitungsbereich, vorzugsweise davor entlang der Bearbeitungsbahn befindet.

5. Verfahren nach einem der Ansprüche 1 bis 3 in einer Maschine zum Laserschweißen eines Materials oder zum additiven Fertigen von dreidimensionalen Strukturen mittels Laser, wobei die Maschine einen Bearbeitungskopf umfasst, der einen Austritt des Bearbeitungslaserstrahls aufweist, der in der Nähe des Materials angeordnet ist, und der Messstrahl mit optischer Strahlung durch den Austritt des Bearbeitungsstrahls geleitet wird und zu einem Messbereich des Materials gerichtet wird, der sich koaxial zu dem aktuellen Bearbeitungsbereich oder angrenzend an dem aktuellen Bearbeitungsbereich, vorzugsweise dahinter entlang der Bearbeitungsbahn befindet.

6. Verfahren nach Anspruch 4 oder 5, wobei der Messstrahl mit optischer Strahlung mittels eines optischen Abtasten-Systems zu dem Messbereich des Materials gerichtet wird, dessen Neigung gemäß dem Absolutwert und der Richtung der Vorschubgeschwindigkeit des Bearbeitungskopfs entlang des Bearbeitungswegs gesteuert wird.

7. Verfahren nach einem der vorangehenden Ansprüche, wobei der optische Messweg und der optische Referenzweg entsprechende optische Elemente umfassen, wobei der optische Referenzweg ein reflektierendes Rücklaufelement umfasst, das der Oberfläche des im Messweg dazwischengelegten Materials entspricht, und optische Dämpfungsmittel umfasst, die eingerichtet sind, die Intensität der durch das reflektierende Rücklaufelement reflektierten Referenzstrahlung in Bezug auf die Intensität der durch das bearbeitete Material reflektierten optische Messstrahlung auszugleichen, und wobei der optische Messweg und der optische Referenzweg von einer gemeinsamen Quelle ausgehen, mittels Strahlsplittenmittel getrennt werden, getrennt zur Oberfläche des bearbeiteten Materials und zu dem reflektierenden Rücklaufelement geleitet werden und in einem optischen Erfassungsweg gesammelt werden, wobei der Messstrahl in dem optischen Erfassungsweg vom Referenzstrahl getrennt wird, die Strahlen mit steuerbarer Ausrichtung zu dem gemeinsamen Einfallsbereich der optischen interferometrischen Sensormittel gerichtet werden, wobei die steuerbare Ausrichtung den Einfallswinkel zwischen dem Messstrahl und dem Referenzstrahl bestimmt.

8. Verfahren nach Anspruch 1, wobei in einer Maschine zum Laserschneiden, Bohren oder Schweißen eines Materials oder zum additiven Fertigen von dreidimensionalen Strukturen mittels Laser, die einen Bearbeitungskopf umfasst, der eine Düse zum Ausgeben eines Hilfsgasstroms aufweist, in der der Messstrahl mit optischer Strahlung durch die Düse geleitet wird, die Bestimmung des Unterschieds in der optischen Länge zwischen dem optischen Messweg und dem optischen Referenzweg auf einer normalisierten optischen Länge des optischen Messwegs basiert, die aus der geometrischen Länge und einem normalisierten Brechungsindex eines Abschnitts des optischen Messwegs berechnet wird, der durch eine Kammer des Hilfsgases der Düse geht, der in Abhängigkeit vom Druck des Hilfsgases in der Kammer berechnet wird, gemäß einer vorbestimmten Nominalabhängigkeitsbeziehung des Brechungsindex des Hilfsgases vom Druck des Gases.

9. Verfahren nach Anspruch 1, wobei die Bestimmung des Unterschieds in der optischen Länge zwischen dem optischen Messweg und dem optischen Referenzweg auf einer normalisierten optischen Länge des optischen Messwegs basiert, die aus der geometrischen Länge und einem normalisierten Brechungsindex eines Übertragungsmediums eines Abschnitts des optischen Messwegs berechnet wird, der in Abhängigkeit von der Temperatur, dem Druck oder einem anderen physikalischen Parameter des mindestens einen Abschnitts des optischen Wegs gemäß einer vorbestimmten Nominalabhängigkeitsbeziehung des Brechungsindex von der Temperatur, dem Druck oder einem anderen physikalischen Parameter des Übertragungsmediums des Messstrahls mit optischer Strahlung berechnet wird, oder
wobei die Bestimmung des Unterschieds in der optischen Länge zwischen dem optischen Messweg und dem optischen Referenzweg auf einer normalisierten optischen Länge des optischen Messwegs basiert, die aus der normalisierten geometrischen Länge und einem Brechungsindex eines Materialübertragungsmediums eines Abschnitts des optischen Messwegs berechnet wird, in dem die normalisierte geometrische Länge in Abhängigkeit von der mechanischen Verformung des Materialübertragungsmediums gemäß einer vorbestimmten Nominalabhängigkeitsbeziehung der geometrischen Länge von der mechanischen Verformung des Materialübertragungsmediums des Messstrahls mit optischer Strahlung berechnet wird.

10. Verfahren nach einem der vorangehenden Ansprüche, umfassend Bestimmen einer Störung der aktuellen optischen Länge von mindestens einem Abschnitt des optischen Messwegs in Bezug auf die aktuelle optische Länge eines entsprechenden Abschnitts des optischen Referenzwegs und Korrigieren des bestimmten Wertes des Abstands zwischen dem Bearbeitungskopf und der Oberfläche des Materials basierend auf der Störung

wobei der Messstrahl, der auf die optischen interferometrischen Sensormittel einfallend ist, mindestens einen Kalibrierungsmessstrahl umfasst, der sich aus der Bewegung eines optischen Kalibrierungsmesswegs ergibt, wobei der Messstrahl durch mindestens eine retroreflektierenden Oberfläche eines statischen optischen Elements reflektiert oder gestreut wird, das entlang des optischen Messwegs dazwischengelegt ist, und wobei der Referenzstrahl, der auf die optischen interferometrischen Sensormittel einfallend ist, einen entsprechenden Kalibrierungsreferenzstrahl umfasst, der sich aus der Bewegung eines Kalibrierungsreferenzwegs ergibt, aufweisend eine optische Länge, die der optischen Länge des optischen Kalibrierungsmesswegs in einer Nominalbetriebsbedingung der Kalibrierung entspricht, in dem die geometrische Länge und der Brechungsindex des Übertragungsmediums des optischen Kalibrierungsmesswegs der geometrischen Länge und dem Brechungsindex des Übertragungsmediums des optischen Kalibrierungsreferenzwegs innerhalb eines vorbestimmten Toleranzbereichs entsprechen,
und wobei Bestimmen der Störung der aktuellen optischen Länge von mindestens einem Abschnitt des optischen Messwegs Folgendes umfasst:

- Überlagern des Kalibrierungsmessstrahls und des Kalibrierungsreferenzstrahls auf einem gemeinsamen Einfallsbereich der optischen interferometrischen Sensormittel entlang einer vorbestimmten Beleuchtungsachse;
- Erfassen der Position eines Musters von Interferenzstreifen zwischen dem Kalibrierungsmessstrahl und dem Kalibrierungsreferenzstrahl entlang der Beleuchtungsachse auf dem gemeinsamen Einfallsbereich; und
- Bestimmen eines Unterschieds in der optischen Länge zwischen dem optischen Kalibrierungsmessweg und dem optischen Kalibrierungsreferenzweg, die auf einen Unterschied zwischen der geometrischen Länge des optischen Kalibrierungsmesswegs und der geometrischen Länge des optischen Kalibrierungsreferenzwegs und/oder dem Brechungsindex des optischen Kalibrierungsmesswegs und dem Brechungsindex des optischen Kalibrierungsreferenzwegs - in Abhängigkeit von der Position des Musters von Interferenzstreifen entlang der Beleuchtungsachse des Einfallsbereichs hinweist,

wobei der Unterschied in der optischen Länge zwischen dem optischen Kalibrierungsmessweg und dem optischen Kalibrierungsreferenzweg auf die oben genannte Störung in der aktuellen optischen Länge von mindestens einem Abschnitt des optischen Messwegs hinweist.

11. Verfahren nach Anspruch 8, wobei der Druck des Hilfsgases in der Hilfsgaskammer der Düse unmittelbar mittels Drucksensoren gemessen wird, die der Kammer zugewandt sind, oder
wobei der Druck des Hilfsgases in der Hilfsgaskammer der Düse mittelbar aus einer Messung der Änderung der lokalen Position einer Oberfläche eines optischen Schutz- oder Begrenzungselements der Hilfsgaskammer entlang der Achse des Messstrahls abgeleitet wird, gemäß einer vorbestimmten Nominalbeziehung zwischen der Position der Oberfläche des optischen Schutz- oder Begrenzungselements der Hilfsgaskammer in Bezug auf eine vorbestimmte Nominalposition und den Druck des Hilfsgases, wobei die Messung der Änderung der lokalen Position der Oberfläche des optischen Schutz- oder Begrenzungselements der Hilfsgaskammer in Abhängigkeit von dem Unterschied in der Länge zwischen einem zusätzlichen optischen Messweg zur Messung des optischen Schutz- oder Begrenzungselements, der mindestens einen darunter umfasst: einen ersten Abschnitt zwischen einer Quelle des Messstrahls und dem optischen Schutz- oder Begrenzungselement, auf dessen erster Oberfläche der Messstrahl mit Teilrückreflexion auftrifft, und einen zweiten Abschnitt zwischen der Oberfläche des bearbeiteten Materials und dem optischen Schutz- oder Begrenzungselement, auf dessen zweiter Oberfläche der Messstrahl mit Teilrückreflexion auftrifft, und einem jeweiligen zusätzlichen optischen Referenzweg aufweisend eine optische Länge, die der optischen Länge des zusätzlichen optischen Messwegs des optischen Schutz- oder Begrenzungselements in einer Nominalbetriebsbedingung entspricht, der eine Teilrückreflexion des Messstrahls auf die erste oder zweite Oberfläche des optischen Schutz- oder Begrenzungselements umfasst, wenn es sich an der vorbestimmten Nominalposition entlang der Achse des Bearbeitungslaserstrahls für einen vorbestimmten Referenzdruckwert des Hilfsgases in der Hilfsgaskammer der Düse befindet.

12. Verfahren nach einem der vorangehenden Ansprüche, wobei der Messstrahl, der auf die optischen interferometrischen Sensormittel einfallend ist, einen Hauptmessstrahl umfasst, der sich aus der Bewegung eines Hauptmesswegs ergibt, mit Reflexion von der Oberfläche des Materials im Bearbeitungsbereich und mit Übertragung durch jedes entlang des optischen Wegs des Hochleistungsbearbeitungslaserstrahls dazwischengelegte optische Element, und mindestens einen zusätzlichen multiplexierten Messstrahl, der sich aus der Bewegung eines zusätzlichen optischen Messwegs ergibt, mit Reflexion von der Oberfläche des bearbeiteten Materials und aufweisend eine geometrische Länge, die größer als die geometrische Länge des optischen Hauptmesswegs ist, der mindestens eine Teilrückreflexion an der Oberfläche eines entlang des optischen Wegs des Hochleistungsbearbeitungslaserstrahls dazwischengelegten optischen Elements umfasst, wobei das Verfahren folgende Schritte umfasst:

- Erfassen auf dem gemeinsamen Einfallsbereich der Position eines zusätzlichen Musters von Interferenzstreifen aufweisend einen Hohepunkt oder Maximum der Intensität der optischen Strahlung, der von dem Hohepunkt oder Maximum der Intensität der optischen Strahlung des Hauptmusters von Interferenzstreifen zwischen dem Messstrahl und dem Hauptreferenzstrahl verschieden ist, oder eine eigene Position der Hüllkurve der Intensität der optischen Strahlung, die von der eigenen Position der Hüllkurve der Intensität der optischen Strahlung des Hauptmusters von Interferenzstreifen versetzt ist; und
- Bestimmen eines Unterschieds in der optischen Länge zwischen dem optischen Messweg und dem zusätzlichen optischen Referenzweg, die auf einen Unterschied zwischen dem aktuellen Abstand zwischen dem Bearbeitungskopf und der Oberfläche des Materials im Bearbeitungsbereich und dem vorbestimmten Nominalabstand - in Abhängigkeit von der Position des zusätzlichen Musters von Interferenzstreifen entlang der Beleuchtungsachse des Einfallsbereichs hinweist,

oder

wobei der Referenzstrahl, der auf die optischen interferometrischen Sensormittel einfallend ist, einen Hauptreferenzstrahl, der sich aus der Bewegung eines optischen Hauptreferenzwegs ergibt, und mindestens einen zusätzlichen multiplexierten Referenzstrahl, der sich aus der Bewegung eines zusätzlichen optischen Referenzwegs ergibt, aufweisend eine geometrische Länge, die von der geometrischen Länge des optischen Hauptreferenzwegs verschieden ist, umfasst,
wobei das Verfahren folgende Schritte umfasst:

- Erfassen auf dem gemeinsamen Einfallsbereich der Position eines zusätzlichen Musters von Interferenzstreifen aufweisend einen Hohepunkt oder Maximum der Intensität der optischen Strahlung, der von dem Hohepunkt oder Maximum der Intensität der optischen Strahlung des Hauptmusters von Interferenzstreifen zwischen dem Messstrahl und dem Hauptreferenzstrahl verschieden ist, oder eine eigene Position der Hüllkurve der Intensität der optischen Strahlung von der eigenen Position der Hüllkurve der Intensität der optischen Strahlung des Hauptmusters von Interferenzstreifen versetzt ist; und

- Bestimmen eines Unterschieds in der optischen Länge zwischen dem optischen Messweg und dem zusätzlichen optischen Referenzweg der auf einen Unterschied zwischen dem aktuellen Abstand zwischen dem Bearbeitungskopf und der Oberfläche des Materials im Bearbeitungsbereich und dem vorbestimmten Nominalabstand - in Abhängigkeit von der Position des zusätzlichen Musters von Interferenzstreifen entlang der Beleuchtungsachse des Einfallsbereichs hinweist.

13. Verfahren zur Steuerung der relativen Position zwischen einem Bearbeitungskopf einer Maschine zum Laserbearbeiten eines Materials, die mittels eines Hochleistung-Bearbeitungslaserstrahl arbeitet, der von dem Kopf emittiert wird und entlang eines Bearbeitungswegs auf das Material geleitet ist, wobei der Bearbeitungsweg eine Abfolge von Bearbeitungsbereichen umfasst, und dem Material in den Bearbeitungsbereichen, **dadurch gekennzeichnet, dass** es Durchführen eines Verfahrens zum Bestimmen des Abstands zwischen dem Bearbeitungskopf und der Oberfläche des Materials nach einem der Ansprüche 1 bis 12 und Bewegen des Bearbeitungskopfs zu dem Material oder davon weg oder in Verschiebung oder Neigung relativ zur Oberfläche in Abhängigkeit von einem vorbestimmten Bearbeitungsdesign und dem bestimmten Abstand zwischen dem Bearbeitungskopf und der Oberfläche des Materials, umfasst.

14. System zum Bestimmen des Abstands (d) zwischen einem Bearbeitungskopf (14) in einer Maschine zum Laserbearbeiten eines Materials (WP), die mit einem Hochleistung-Bearbeitungslaserstrahl (B) arbeitet, der von dem Kopf (14) emittiert wird und entlang einer Bearbeitungsbahn (T) auf das Material (WP) geleitet ist, wobei die Bearbeitungsbahn eine Abfolge von Bearbeitungsbereichen umfasst, und der Oberfläche des Materials (WP) in den Bearbeitungsbereichen, umfassend:

- Mittel (100) zum Erzeugen eines Messstrahls mit optischer Strahlung mit geringer Kohärenz (M);
- Mittel zum Verbreiten des Messstrahls (M), die eingerichtet sind, den Messstrahl (M) durch den Bearbeitungskopf (14) zu einem Bearbeitungsbereich zu leiten und des durch die Oberfläche des Materials (WP) im Bearbeitungsbereich reflektierten oder gestreuten Messstrahls (M) durch den Kopf (14) zu optischen interferometrischen Sensormittel (S) entlang ersten Einfallsrichtung zu leiten, in der der Messstrahl (M) einen optischen Messweg (PM) von einer jeweiligen Quelle (100) zu den optischen interferometrischen Sensormittel (S) zurücklegt, umfassend einen ersten Abschnitt zwischen der Quelle (100) und dem Bearbeitungskopf (14) und einen zweiten Abschnitt zwischen dem Bearbeitungskopf (14) und den interferometrischen Sensormittel (S), aufweisend eine vorbestimmte und unveränderliche geometrische Länge;
- Mittel (100) zum Erzeugen eines Referenzstrahls (R) der optischen Strahlung mit geringer Kohärenz;
- Mittel zum Verbreiten des Referenzstrahls (R), die eingerichtet sind, den Referenzstrahl (R) zu den optischen interferometrischen Sensormittel (S) entlang einer zweiten Einfallsrichtung unter einem vorbestimmten Einfallswinkel in Bezug auf die erste Einfallsrichtung des Messstrahls (M) zu leiten, wobei der Referenzstrahl (R) einen optischen Referenzweg (PR) zurücklegt, dessen optische Länge der optischen Länge des optischen Messwegs (PM) in einer Nominalbetriebsbedingung entspricht, in dem der Abstand (d) zwischen dem Bearbeitungskopf (14) und der Oberfläche des Materials (WP) einem vorbestimmten Nominalabstand entspricht;
wobei die Mittel zum Verbreiten des Messstrahls (M) und die Mittel zum Verbreiten des Referenzstrahls (R) so angeordnet sind, dass der Messstrahl (M) und der Referenzstrahl (R) auf einem gemeinsamen Einfallsbereich (C) der optischen interferometrischen Sensormittel (S) entlang einer vorbestimmten Beleuchtungsachse (x) überlagert werden;
- Mittel zum Erfassen der Position eines Musters von Interferenzstreifen (F) zwischen dem Messstrahl (M) und dem Referenzstrahl (R) entlang der Beleuchtungsachse (x) auf dem gemeinsamen Einfallsbereich (C), wobei die Erweiterung des Musters von Interferenzstreifen (F) entlang der Beleuchtungsachse (x) der Kohärenzlänge der optischen Strahlung mit geringer Kohärenz entspricht; und
- Verarbeitungsmittel (350), die eingerichtet sind, einen Unterschied in der optischen Länge zwischen dem optischen Messweg (PM) und dem optischen Referenzweg (PR) zu bestimmen, der auf einen Unterschied zwischen (a) dem aktuellen Abstand (d) zwischen dem Bearbeitungskopf (14) und der Oberfläche des Materials (WP) im Bearbeitungsbereich und (b) einem vorbestimmten Nominalabstand - in Abhängigkeit von der Position des Musters von Interferenzstreifen (F) entlang der Beleuchtungsachse (x) des Einfallsbereichs (C) hinweist.

15. Maschine zum Laserbearbeiten eines Materials, die mit einem Hochleistung-Bearbeitungslaserstrahl (B) arbeitet, der von einem Bearbeitungskopf (14) emittiert wird und entlang einer Arbeitsbahn (T) auf das Material (WP) geleitet ist, wobei die Bearbeitungsbahn eine Abfolge von Bearbeitungsbereichen umfasst, und Mittel zum Steuern der relativen Position zwischen dem Bearbeitungskopf (14) und dem Material (WP) umfasst, **dadurch gekennzeichnet, dass** sie ein System zum Bestimmen des Abstands (d) zwischen dem Bearbeitungskopf (14) und der Oberfläche des Materials (WP) in den Bearbeitungsbereichen gemäß Anspruch 14 umfasst, das eingerichtet ist, ein Verfahren gemäß einem der Ansprüche 1 bis 12 durchzuführen, wobei die Mittel zum Steuern der relativen Position zwischen dem Bearbeitungskopf (14) und dem Material (WP) gemäß einem vorbestimmten Bearbeitungsdesign und dem bestimmten Abstand (d) zwischen dem Bearbeitungskopf (14) und der Oberfläche des Materials (WP) arbeiten.

**Revendications**

1. Procédé pour déterminer la distance de séparation entre une tête de travail dans une machine pour le traitement au laser d'un matériau, fonctionnant au moyen d'un faisceau laser de traitement de haute puissance émis par ladite tête et dirigé le long d'une trajectoire de travail sur le matériau comprenant une succession de zones de travail, et la surface du matériau dans lesdites zones de travail, comprenant les étapes suivantes:

   - générer un faisceau de rayonnement optique à faible cohérence pour la mesure, diriger ledit faisceau de mesure vers une zone de travail par l'intermédiaire de ladite tête de travail, et diriger le faisceau de mesure réfléchi ou diffusé par la surface du matériau dans ladite zone de travail par ladite tête et vers des moyens de capteur interférométrique optique le long d'une première direction d'incidence, dans laquelle le faisceau de mesure parcourt un chemin optique de mesure depuis une source respective vers lesdits moyens de capteur interférométrique optique comprenant une première section comprise entre ladite source et la tête de travail et une deuxième section comprise entre ladite tête de travail et les moyens de capteur interférométrique ayant une longueur géométrique respective prédéterminée et invariante;
   - générer un faisceau de référence dudit rayonnement optique à faible cohérence, et diriger ledit faisceau de référence vers lesdits moyens de capteur interférométrique optique le long d'une deuxième direction d'incidence, à un angle d'incidence prédéterminé par rapport à la première direction d'incidence dudit faisceau de mesure, dans laquelle le faisceau de référence parcourt un chemin optique de référence dont la longueur optique est équivalente à la longueur optique du chemin optique de mesure dans une condition de fonctionnement nominale dans laquelle la distance entre la tête de travail et la surface du matériau correspond à une distance de séparation nominale prédéterminée ;
   - superposer le faisceau de mesure et le faisceau de référence sur une région commune d'incidence desdits moyens de capteur interférométrique optique, le long d'un axe d'illumination prédéterminé;
   - détecter la position d'un motif de franges d'interférence entre le faisceau de mesure et le faisceau de référence le long dudit axe d'illumination sur ladite région commune d'incidence, où l'extension dudit motif de franges d'interférence le long de l'axe d'illumination correspond à la longueur de cohérence dudit rayonnement optique à faible cohérence ; et
   - déterminer une différence de longueur optique entre le chemin optique de mesure et le chemin optique de référence - indicative d'une différence entre la distance de séparation actuelle entre la tête de travail et la surface du matériau dans la zone de travail et une distance de séparation nominale prédéterminée
   - en fonction de la position dudit motif de franges d'interférence le long dudit axe d'illumination de ladite région d'incidence.

2. Procédé selon la revendication 1, dans lequel la position du motif de franges d'interférence le long de l'axe d'illumination est la position intrinsèque de l'enveloppe de l'intensité du rayonnement optique dudit motif de franges d'interférence, la position intrinsèque de l'enveloppe de l'intensité du rayonnement optique dudit motif de franges d'interférence étant la position du pic ou maximum de l'enveloppe d'intensité dudit rayonnement optique.

3. Procédé selon la revendication 1 ou 2, dans lequel lesdits moyens de capteur interférométrique optique comprennent un arrangement de photodétecteurs le long dudit axe d'illumination, et l'angle d'incidence est contrôlé de manière que la fréquence spatiale dudit motif de franges d'interférence soit supérieure à la fréquence spatiale des photodétecteurs et différente des multiples de la fréquence spatiale des photodétecteurs, de préférence proche d'un multiple demi-entier de ladite fréquence spatiale des photodétecteurs.

4. Procédé selon l'une quelconque des revendications précédentes dans une machine pour la découpe, le perçage ou le soudage au laser d'un matériau ou pour la fabrication additive de structures tridimensionnelles par laser, dans lequel ladite machine comprend une tête de travail ayant une buse pour la distribution d'un flux de gaz d'assistance, disposée à proximité dudit matériau, et le faisceau de rayonnement optique de mesure est dirigé à travers ladite buse et dirigé vers une région de mesure du matériau qui est coaxiale à ladite zone de travail actuelle ou adjacente à ladite zone de travail actuelle, de préférence devant celle-ci le long de la trajectoire de travail.

5. Procédé selon l'une quelconque des revendications 1 à 3 dans une machine pour le soudage au laser d'un matériau ou la fabrication additive de structures tridimensionnelles par laser, dans lequel ladite machine comprend une tête de travail qui a une sortie du faisceau laser de traitement disposée à proximité dudit matériau, et le faisceau de rayonnement optique de mesure est dirigé à travers ladite sortie du faisceau de traitement et dirigé vers une région de mesure du matériau qui est coaxiale à ladite zone de travail actuelle ou adjacente à ladite zone de travail actuelle, de préférence derrière celle-ci le long de la trajectoire de travail.

6. Procédé selon la revendication 4 ou 5, dans lequel le faisceau de rayonnement optique de mesure est dirigé vers ladite région de mesure du matériau au moyen d'un système de balayage optique dont l'inclinaison est contrôlée en fonction de la valeur absolue et de la direction de la vitesse de mouvement vers l'avant de la tête de travail le long du chemin de travail.

7. Procédé selon l'une quelconque des revendications précédentes, dans lequel le chemin optique de mesure et le chemin optique de référence comprennent des éléments optiques correspondants, le chemin optique de référence comprenant un élément de retour réfléchissant correspondant à la surface du matériau interposé dans le chemin optique de mesure, et des moyens d'atténuation optique adaptés pour équilibrer l'intensité du rayonnement optique de référence réfléchi par ledit élément de retour réfléchissant par rapport à l'intensité du rayonnement optique de mesure réfléchi par le matériau en cours de traitement, et dans lequel ledit chemin optique de mesure et ledit chemin optique de référence proviennent d'une source commune, sont séparés au moyen de moyens de séparation de faisceaux, dirigés séparément vers la surface du matériau en cours de traitement et vers ledit élément de retour réfléchissant, respectivement, et rassemblés dans un chemin optique de détection, dans le chemin optique de détection le faisceau de mesure étant séparé du faisceau de référence, lesdits faisceaux étant dirigés avec une orientation contrôlable vers ladite région commune d'incidence des moyens de capteur interférométrique optique, l'orientation contrôlable déterminant l'angle d'incidence entre le faisceau de mesure et le faisceau de référence.

8. Procédé selon la revendication 1, dans une machine pour la découpe, le perçage ou le soudage au laser d'un matériau, ou pour la fabrication additive de structures tridimensionnelles par laser comprenant une tête de travail ayant une buse pour la distribution d'un flux de gaz d'assistance dans lequel le faisceau de rayonnement optique de mesure est dirigé à travers ladite buse, la détermination de la différence de longueur optique entre le chemin optique de mesure et le chemin optique de référence est basée sur une longueur optique normalisée du chemin optique de mesure qui est calculée à partir de la longueur géométrique et d'un indice de réfraction normalisé d'une portion dudit chemin optique de mesure qui traverse une chambre de gaz d'assistance de la buse, qui est calculé en fonction de la pression du gaz d'assistance dans ladite chambre, selon une relation nominale prédéterminée de dépendance de l'indice de réfraction du gaz d'assistance en fonction de la pression dudit gaz.

9. Procédé selon la revendication 1, dans lequel la détermination de la différence de longueur optique entre le chemin optique de mesure et le chemin optique de référence est basée sur une longueur optique normalisée du chemin optique de mesure qui est calculée à partir de la longueur géométrique et d'un indice de réfraction normalisé d'un milieu de transmission d'une portion dudit chemin optique de mesure, qui est calculé en fonction de la température, de la pression ou d'un autre paramètre physique dudit au moins une portion du chemin optique selon une relation nominale prédéterminée de dépendance de l'indice de réfraction en fonction de la température, de la pression ou d'un autre paramètre physique du milieu de transmission du faisceau de rayonnement optique de mesure, ou dans lequel la détermination de la différence de longueur optique entre le chemin optique de mesure et le chemin optique de référence est basée sur une longueur optique normalisée du chemin optique de mesure qui est calculée à partir de la longueur géométrique normalisée et d'un indice de réfraction d'un milieu de transmission matériel d'une portion dudit chemin optique de mesure, dans lequel la longueur géométrique normalisée est calculée en fonction de la déformation mécanique dudit milieu de transmission matériel selon une relation nominale prédéterminée de dépendance de la longueur géométrique en fonction de la déformation mécanique du milieu de transmission matériel du faisceau de rayonnement optique de mesure.

10. Procédé selon l'une quelconque des revendications précédentes, comprenant la détermination d'une perturbation de la longueur optique actuelle d'au moins une portion du chemin optique de mesure par rapport à la longueur optique actuelle d'une portion correspondante du chemin optique de référence, et la correction de la valeur déterminée de la distance de séparation entre la tête de travail et la surface du matériau sur la base de ladite perturbation,

dans lequel le faisceau de mesure incident sur lesdits moyens de capteur interférométrique optique comprend au moins un faisceau de mesure de calibration qui résulte du parcours d'un chemin optique de mesure de calibration, dans lequel ledit faisceau de mesure est réfléchi ou diffusé par au moins une surface rétro-réfléchissante d'un élément optique statique interposé le long du chemin optique de mesure, et dans lequel le faisceau de référence incident sur lesdits moyens de capteur interférométrique optique comprend un faisceau de référence de calibration respectif qui résulte du parcours d'un chemin optique de référence de calibration ayant une longueur optique équivalente à la longueur optique du chemin optique de mesure de calibration dans une condition de fonctionnement nominale de calibration dans laquelle la longueur géométrique et l'indice de réfraction du milieu de transmission du chemin optique de mesure de calibration sont égaux à la longueur géométrique et à l'indice de réfraction du milieu de transmission du chemin optique de référence de calibration dans une plage de tolérance prédéterminée,

et dans lequel la détermination de la perturbation de la longueur optique actuelle d'au moins une portion du chemin optique de mesure comprend :

- superposer le faisceau de mesure de calibration et le faisceau de référence de calibration sur une région commune d'incidence desdits moyens de capteur interférométrique optique, le long d'un axe d'illumination prédéterminé ;
- détecter la position d'un motif de franges d'interférence entre le faisceau de mesure de calibration et le faisceau de référence de calibration le long dudit axe d'illumination sur ladite région commune d'incidence ; et
- déterminer une différence de longueur optique entre le chemin optique de mesure de calibration et le chemin optique de référence de calibration - indicative d'une différence entre la longueur géométrique du chemin optique de mesure de calibration et la longueur géométrique du chemin optique de référence de calibration, et/ou l'indice de réfraction du chemin optique de mesure de calibration et l'indice de réfraction du chemin optique de référence de calibration en fonction de la position dudit motif de franges d'interférence le long dudit axe d'illumination de ladite région d'incidence,

ladite différence de longueur optique entre le chemin optique de mesure de calibration et le chemin optique de référence de calibration étant indicative de la perturbation susmentionnée dans la longueur optique actuelle d'au moins une portion du chemin optique de mesure.

11. Procédé selon la revendication 8, dans lequel la pression du gaz d'assistance dans la chambre de gaz d'assistance de la buse est détectée directement au moyen de capteurs de pression faisant face à ladite chambre, ou
dans lequel la pression du gaz d'assistance dans la chambre de gaz d'assistance de la buse est dérivée indirectement d'une mesure de la variation de la position locale d'une surface d'un élément optique de protection ou de délimitation de la chambre de gaz d'assistance le long de l'axe du faisceau de mesure selon une relation nominale prédéterminée entre la position de la surface dudit élément optique de protection ou de délimitation de la chambre de gaz d'assistance par rapport à une position nominale prédéterminée et la pression du gaz d'assistance, la mesure de la variation de la position locale de ladite surface de l'élément optique de protection ou de délimitation de la chambre de gaz d'assistance étant déterminée en fonction de la différence de longueur entre un chemin optique de mesure supplémentaire pour mesurer ledit élément optique de protection ou de délimitation comprenant au moins une parmi une première section entre une source du faisceau de mesure et l'élément optique de protection ou de délimitation sur une première surface de laquelle ledit faisceau de mesure frappe avec réflexion arrière partielle et une deuxième section entre la surface du matériau en cours de traitement et l'élément optique de protection ou de délimitation sur une deuxième surface de laquelle ledit faisceau de mesure frappe avec réflexion arrière partielle, et un chemin optique de référence supplémentaire respectif ayant une longueur optique égale à la longueur optique du chemin optique de mesure supplémentaire dudit élément optique de protection ou de délimitation dans une condition de fonctionnement nominale comprenant une réflexion arrière partielle du faisceau de mesure vers ladite première ou deuxième surface dudit élément optique de protection ou de délimitation lorsqu'il est à ladite position nominale prédéterminée le long de l'axe du faisceau laser de traitement pour une valeur de pression de référence prédéterminée du gaz d'assistance dans la chambre de gaz d'assistance de la buse.

12. Procédé selon l'une quelconque des revendications précédentes, dans lequel le faisceau de mesure incident sur lesdits moyens de capteur interférométrique optique comprend un faisceau de mesure principal qui résulte du parcours d'un chemin optique de mesure principal avec réflexion sur la surface du matériau dans la zone de travail et avec transmission à travers chaque élément optique interposé le long du chemin optique du faisceau laser de traitement de haute puissance, et au moins un faisceau de mesure supplémentaire multiplexé qui résulte du parcours d'un chemin optique de mesure supplémentaire, avec réflexion sur la surface du matériau en cours de traitement et ayant une longueur géométrique supérieure à la longueur géométrique dudit chemin optique de mesure principal, qui comprend au moins une réflexion arrière partielle à la surface d'un élément optique interposé le long du chemin optique du faisceau laser de traitement de haute puissance, le procédé comprenant les étapes de :

- détecter, sur ladite région commune d'incidence, la position d'un motif de franges d'interférence supplémentaire ayant un pic ou maximum d'intensité du rayonnement optique différent du pic ou maximum d'intensité du rayonnement optique du motif de franges d'interférence principal entre le faisceau de mesure principal et le faisceau de référence, ou une position intrinsèque de l'enveloppe de l'intensité du rayonnement optique décalée par rapport à la position intrinsèque de l'enveloppe de l'intensité du rayonnement optique du motif de franges d'interférence principal; et
- déterminer une différence de longueur optique entre le chemin optique de mesure supplémentaire et le chemin optique de référence - indicative d'une différence entre la distance de séparation actuelle entre la tête de travail et la surface du matériau dans la zone de travail et la distance de séparation nominale prédéterminée - en fonction de la position dudit motif de franges d'interférence supplémentaire le long dudit axe d'illumination de ladite région d'incidence,

ou

dans lequel le faisceau de référence incident sur lesdits moyens de capteur interférométrique optique comprend un faisceau de référence principal qui résulte du parcours d'un chemin optique de référence principal et au moins un faisceau de référence supplémentaire multiplexé qui résulte du parcours d'un chemin optique de référence supplémentaire ayant une longueur géométrique différente de la longueur géométrique dudit chemin optique de référence principal,

le procédé comprenant les étapes de :

- détecter sur ladite région commune d'incidence, la position d'un motif de franges d'interférence supplémentaire ayant un pic ou maximum d'intensité du rayonnement optique différent du pic ou maximum d'intensité du rayonnement optique du motif de franges d'interférence principal entre le faisceau de mesure et le faisceau de référence principal, ou une position intrinsèque de l'enveloppe de l'intensité du rayonnement optique décalée par rapport à la position intrinsèque de l'enveloppe d'intensité du rayonnement optique du motif de franges d'interférence principal; et
- déterminer une différence de longueur optique entre le chemin optique de mesure et le chemin optique de référence supplémentaire - indicative d'une différence entre la distance de séparation actuelle entre la tête de travail et la surface du matériau dans la zone de travail et la distance de séparation nominale prédéterminée - en fonction de la position dudit motif de franges d'interférence supplémentaire le long dudit axe d'illumination de ladite région d'incidence.

13. Procédé pour commander la position relative entre une tête de travail d'une machine pour le traitement au laser d'un matériau, fonctionnant au moyen d'un faisceau laser de traitement de haute puissance émis par ladite tête et dirigé le long d'un chemin de travail sur le matériau comprenant une succession de zones de travail, et le matériau dans lesdites zones de travail, **caractérisé en ce qu'**il comprend l'exécution d'un procédé pour déterminer la distance de séparation entre la tête de travail et la surface du matériau selon l'une quelconque des revendications 1 à 12, et le déplacement de la tête de travail vers ou loin du matériau ou en translation ou en inclinaison par rapport à la surface en fonction d'un design de travail prédéterminé et de la distance de séparation déterminée entre la tête de travail et la surface du matériau.

14. Système pour déterminer la distance de séparation (d) entre une tête de travail (14) dans une machine pour le traitement laser d'un matériau (WP), fonctionnant au moyen d'un faisceau laser de traitement de haute puissance (B) émis par ladite tête (14) et dirigé le long d'une trajectoire de travail (T) sur le matériau (WP) comprenant une succession de zones de travail, et la surface du matériau (WP) dans lesdites zones de travail, comprenant:

- des moyens (100) pour générer un faisceau de rayonnement optique à faible cohérence pour la mesure (M),
- des moyens de propagation dudit faisceau de mesure (M) adaptés pour diriger ledit faisceau de mesure (M) vers une zone de travail par l'intermédiaire de ladite tête de travail (14), et pour diriger le faisceau de mesure (M) réfléchi ou diffusé par la surface du matériau (WP) dans ladite zone de travail par ladite tête (14) et vers des moyens de capteur interférométrique optique (S) le long d'une première direction d'incidence, dans laquelle le faisceau de mesure (M) parcourt un chemin optique de mesure (PM) depuis une source respective (100) vers lesdits moyens de capteur interférométrique optique (S) comprenant une première section entre ladite source (100) et la tête de travail (14) et une deuxième section entre ladite tête de travail (14) et les moyens de capteur interférométrique (S), ayant une longueur géométrique respective prédéterminée et invariante;

- des moyens (100) pour générer un faisceau de référence (R) dudit rayonnement optique à faible cohérence;
- des moyens de propagation dudit faisceau de référence (R), adaptés pour diriger ledit faisceau de référence (R) vers lesdits moyens de capteur interférométrique optique (S) le long d'une deuxième direction d'incidence, à un angle d'incidence prédéterminé par rapport à la première direction d'incidence dudit faisceau de mesure (M), dans laquelle le faisceau de référence (R) parcourt un chemin optique de référence (PR) dont la longueur optique est équivalente à la longueur optique du chemin optique de mesure (PM) dans une condition de fonctionnement nominale dans laquelle la distance (d) entre la tête de travail (14) et la surface du matériau (WP) correspond à une distance de séparation nominale prédéterminée ;

dans lequel les moyens de propagation du faisceau de mesure (M) et les moyens de propagation du faisceau de référence (R) sont disposés pour superposer le faisceau de mesure (M) et le faisceau de référence (R) sur une région commune d'incidence (C) desdits moyens de capteur interférométrique optique (S), le long d'un axe d'illumination prédéterminé (x);

- des moyens pour détecter la position d'un motif de franges d'interférence (F) entre le faisceau de mesure (M) et le faisceau de référence (R) le long dudit axe d'illumination (x) sur ladite région commune d'incidence (C), où l'extension dudit motif de franges d'interférence (F) le long de l'axe d'illumination (x) correspond à la longueur de cohérence dudit rayonnement optique à faible cohérence; et
- des moyens de traitement (350) disposés pour déterminer une différence de longueur optique entre le chemin optique de mesure (PM) et le chemin optique de référence (PR) - indicative d'une différence entre (a) la distance de séparation actuelle (d) entre la tête de travail (14) et la surface du matériau (WP) dans la zone de travail et (b) une distance de séparation nominale prédéterminée - en fonction de la position dudit motif de franges d'interférence (F) le long dudit axe d'illumination (x) de ladite région d'incidence (C).

15. Machine pour le traitement laser d'un matériau, fonctionnant au moyen d'un faisceau laser de traitement de haute puissance (B) émis par une tête de travail (14) et dirigé le long d'une trajectoire de travail (T) sur le matériau (WP) comprenant une succession de zones de travail, et comprenant des moyens pour commander la position relative entre ladite tête de travail (14) et ledit matériau (WP), **caractérisée en ce qu'**elle comprend un système pour déterminer la distance de séparation (d) entre ladite tête de travail (14) et la surface du matériau (WP) dans lesdites zones de travail selon la revendication 14, disposé pour exécuter un procédé selon l'une quelconque des revendications 1 à 12, lesdits moyens pour commander la position relative entre ladite tête de travail (14) et ledit matériau (WP) agissant en fonction d'un design de travail prédéterminé et de la distance de séparation déterminée (d) entre la tête de travail (14) et la surface du matériau (WP).

FIG. 1

FIG. 2

FIG. 3

FIG. 4a

FIG. 4b

X coordinate

FIG. 4c

FIG. 5

FIG. 6

FIG. 7

FIG. 8

FIG. 9a

FIG. 9b

FIG. 10a

FIG. 10b

FIG. 10c

**EP 4 070 038 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010092533 A1
- US 2016059350 A1
- US 2019299327 A1

**Non-patent literature cited in the description**

- Three-dimensional imaging by sub-Nyquist sampling of white-light interferograms. **P. DE GROOT ; L. DECK.** OPTICS LETTERS. OPTICAL SOCIETY OF AMERICA, 1993, vol. 18, 1462-1464
- **P. GIRSHOVITZ et al.** Doubling the field of view in off-axis low-coherence interferometric imaging. *LIGHT: SCIENCE & APPLICATIONS,* 2014, vol. 3 (3), e151